# EUROPÄISCHE PATENTSCHRIFT

(11) **EP 4 684 702 B1**
(45) Veröffentlichungstag und Bekanntmachung des Hinweises auf die Patenterteilung: **08.07.2026**
(21) Anmeldenummer: 24190858.1
(22) Anmeldetag: 25.07.2024
(51) Int. Cl.: A47J 31/60

(54) **FILTERVORRICHTUNG ZUR VERWENDUNG IN EINER GETRÄNKEZUBEREITUNGSANLAGE, VERWENDUNG UND VERFAHREN**
FILTER DEVICE FOR USE IN A BEVERAGE PREPARATION INSTALLATION, USE AND METHOD
DISPOSITIF DE FILTRATION DESTINÉ À ÊTRE UTILISÉ DANS UNE INSTALLATION DE PRÉPARATION DE BOISSONS, UTILISATION ET PROCÉDÉ

(43) Veröffentlichungstag der Anmeldung: 28.01.2026
(73) Patentinhaber: Wendt, Falko, 15345 Rehfelde (DE)
(72) Erfinder: Wendt, Falko, 15345 Rehfelde (DE)
(74) Vertreter: Michalski Hüttermann & Partner mbB

(56) Entgegenhaltungen:
- EP-A1- 2 979 593
- US-A1- 2017 119 204

## Beschreibung

Die vorliegende Offenbarung betrifft eine Filtervorrichtung zur Verwendung in einer Getränkezubereitungsanlage, beispielsweise einem Kaffeevollautomaten. Die vorliegende Offenbarung betrifft ferner eine Verwendung einer Filtervorrichtung sowie ein Verfahren.

Filtervorrichtungen können typischerweise das in der Getränkezubereitungsanlage enthaltene Wasser von Verunreinigungen bereinigen, z.B. um eine Verunreinigung der zubereiteten Getränke oder der Getränkezubereitungsanlage selbst zu vermeiden. Hierzu weisen Filtervorrichtungen ein Gehäuse mit einem darin enthaltenen Filtrationsmittel auf. Filtervorrichtungen sind auch als Filterkartuschen oder Filterpatronen bekannt.

Solche Filtervorrichtungen sind aus EP2979593 sowie aus US 2017/119204 bekannt.

Bei Getränkezubereitungsanlagen werden Filtervorrichtungen bzw. Filterkartuschen typischerweise regelmäßig ausgetauscht, um die Funktion der Getränkezubereitungsanlage sicherzustellen. Der Austausch der Filtervorrichtung erzeugt regelmäßige Kosten für die neuen Filtervorrichtungen.

Es ist eine Aufgabe der vorliegenden Erfindung, Lösungen anzugeben, um Kosten im Zusammenhang mit Filtervorrichtungen zu senken. Insbesondere ist es eine Aufgabe der Erfindung, eine kostengünstigere Lösung zur Filtration von Wasser in Getränkezubereitungsanlagen anzugeben. Insbesondere soll eine Verwendung einer bzw. der Filtervorrichtung angegeben werden. Insbesondere soll zumindest ein Verfahren im Zusammenhang mit einer bzw. der Filtervorrichtung angegeben werden. Insbesondere sollen die Nachteile des Standes der Technik vermieden oder zumindest im Wesentlichen reduziert werden.

Die Lösung der Aufgabe erfolgt durch die Merkmale der unabhängigen Ansprüche. Bevorzugte Merkmale sind in den Unteransprüchen, in den Zeichnungen und in der Beschreibung angegeben, die jeweils einzeln oder in Kombination einen Aspekt der Erfindung darstellen können.

Vorgeschlagen wird eine Filtervorrichtung zur Aufnahme eines Filtrationsmittels und zur Verwendung in einer Getränkezubereitungsanlage, insbesondere Kaffeevollautomat, insbesondere in einem Wassertank der Getränkezubereitungsanlage. Die Filtervorrichtung weist vorschlagsgemäß ein Gehäuse mit einem Einlassabschnitt, einem Auslassabschnitt, einem Zugangsabschnitt und einer mit dem Einlassabschnitt, dem Auslassabschnitt und dem Zugangsabschnitt fluidisch verbundenen Kammer zur Aufnahme des Filtrationsmittels auf. Die Filtervorrichtung, insbesondere das Gehäuse, ist zum Öffnen und/oder zum Verschließen des Zugangsabschnitts eingerichtet und weist vorzugsweise einen Deckel für den Zugangsabschnitt auf.

Insbesondere kann der Zugangsabschnitt geöffnet und verschlossen werden. Der Zugangsabschnitt kann lösbar verschlossen werden. Die Filtervorrichtung kann einen/den Deckel für den Zugangsabschnitt bzw. zum lösbaren Verschließen des Zugangsabschnitts aufweisen. Das Gehäuse kann insbesondere im Bereich des Zugangsabschnitts zerstörungsfrei geöffnet bzw. geschlossen werden, beispielsweise mittels des Deckels.

In anderen Worten, beispielsweise, wird ein Wasserfilter für einen Kaffeevollautomaten vorgeschlagen, der Filtergranulat oder ein Filtrationsmedium aufnehmen kann und ein Gehäuse aufweist, das man zerstörungsfrei Öffnen und wieder schließen kann, um das Filtergranulat bzw. Filtrationsmedium zu tauschen.

Die Erfindung schafft zahlreiche Vorteile, die durch bevorzugte Merkmale weiter verbessert werden können.

Die Erfindung schafft eine Möglichkeit zur Reduktion von Ressourcenverbrauch und/oder zur Müllvermeidung. Es kann weniger Plastikmüll bzw. Kunststoffmüll erzeugt werden, indem die Filtervorrichtung als Mehrweg-Filterkartusche eingesetzt wird und auf das Verbrauchen von Einweg-Filterkartuschen verzichtet wird.

Der Betreiber der Getränkezubereitungsanlage kann die Kosten zum Betreiben senken, indem lediglich Filtrationsmittel und nicht mehr die ganze Filtervorrichtung erneuert werden muss.

Mit Entwicklung der Erfindung wurde erkannt, dass Getränkezubereitungsanlagen Gebrauch von Wasserfiltern machen, deren Austausch nicht nur das eigentlich verbrauchte Filtrationsmittel erneuert, sondern auch eine große Menge an weiterem Material, das ein Gehäuse des Wasserfilters bildet. Damit werden wertvolle Ressourcen vielfach weggeworfen.

Weiter wurde mit der Entwicklung der Erfindung erkannt, dass aufgrund der Kombination eines fest verschlossenes Gehäuses mit dem Filtrationsmittel das Recycling der vorbekannten Filtervorrichtungen erschwert ist. Insoweit schafft die Erfindung Abhilfe damit, dass ein wiederverwendbares Gehäuse bereitgestellt wird. Erfindungsgemäß kann vereinfacht neues Filtrationsmittel bereitgestellt werden, nahezu ohne, dass unnötige Bestandteile der Filtervorrichtung erneuert werden müssen.

Die Erfindung stellt eine wiederverwendbare Filtervorrichtung für Getränkezubereitungsanlagen bereit, beispielsweise im Sinne von MehrwegFlaschen. Ein Endverbraucher kann dank der Erfindung das Filtrationsmittel selbst erneuern, so dass es zu einer großen Ersparnis von Ressourcen kommt.

Unter der Filtervorrichtung ist beispielsweise eine Filterkartusche oder ein Wasserfilter zu verstehen. Die Filtervorrichtung ist insbesondere zur Aufnahme eines Filtrationsmittels eingerichtet. Das Filtrationsmittel kann beispielsweise ein Granulat, ein Harz, ein Filtergewebe, ein Filtervlies, ein Filterpapier und/oder dergleichen umfassen. Das Filtrationsmittel ist insbesondere eingerichtet zur Filtration von Wasser bzw. Trinkwasser. Das Filtrationsmittel weist insbesondere ein Ionisierungsgranulat auf, beispielsweise mit Sand, Teilentsalzungsharz und/oder Aktivkohle. Das Filtrationsmittel kann zum Entkalken von Wasser und/oder zum Entzug von Geruchs- und/oder Geschmacksstoffen aus Wasser eingerichtet sein.

Die Filtervorrichtung ist insbesondere zur Verwendung bei bzw. in einer Getränkezubereitungsanlage eingerichtet. Die Filtervorrichtung kann in einen Wassertank der Getränkezubereitungsanlage eingesetzt werden, insbesondere um aus dem Wassertank angesaugtes Wasser zu filtrieren. Die Filtervorrichtung kann in eine Wasserleitung eingebunden werden, insbesondere in dem Wassertank. Die Getränkezubereitungsanlage kann ein Getränkeautomat, eine Kaffeemaschine, ein Kaffeevollautomat, ein Kühlschrank, eine Zapfanlage und/oder dergleichen umfassen.

Beispielsweise kann die Filtervorrichtung in den Wassertank der Getränkezubereitungsanlage eingesetzt werden und/oder daran angeschlossen werden. Der Wassertank ist beispielsweise ein Wasserspeicher zur Bevorratung von Wasser, das zur Getränkezubereitung verwendet werden soll. Der Wassertank weist regelmäßig eine Aufnahme zur insbesondere formschlüssigen Aufnahme der Filtervorrichtung auf. Die Filtervorrichtung kann eingerichtet sein, am Wassertank abzudichten, beispielsweise mittels Dichtung(en). Typischerweise wird die Filtervorrichtung in das im Wassertank enthaltene Wasser eingetaucht bzw. in den Wassertank hinein gebracht, um in den Wassertank eingesetzt zu werden.

Das Gehäuse weist den Einlassabschnitt, den Auslassabschnitt, den Zugangsabschnitt und die mit dem Einlassabschnitt, dem Auslassabschnitt und dem Zugangsabschnitt fluidisch verbundene Kammer zur Aufnahme des Filtrationsmittels auf. Das Gehäuse ist beispielsweise als Behältnis ausgebildet. Das Gehäuse weist typischerweise einen Innenraum zur Aufnahme von Filtrationsmittel und zum Durchfluss von zu filtrierendem bzw. filtriertem Wasser auf. Das Gehäuse stellt insbesondere zumindest im Wesentlichen und/oder abschnittsweise die Kammer bereit. Der Einlassabschnitt, der Auslassabschnitt und/oder der Zugangsabschnitt kann/können als Durchgang bzw. Öffnung ausgebildet sein, um Wasser und/oder Filtrationsmittel hindurchzubewegen. Der Einlassabschnitt, der Auslassabschnitt und/oder der Zugangsabschnitt, kann/können (einen) Stutzen aufweisen und/oder durch (einen) Stutzen des Gehäuses gebildet sein.

Unter der Kammer ist insbesondere ein Innenraum der Filtervorrichtung bzw. des Gehäuses zu verstehen. In der Kammer kann das Filtrationsmittel aufgenommen werden. Durch die Kammer kann Wasser fließen. Die Kammer kann zumindest abschnittsweise zylindrisch geformt sein. Die Kammer ist insbesondere durch eine Form eines Inneren des Gehäuses definiert. Die Kammer ist bevorzugt jeweils direkt oder indirekt an den Einlassabschnitt und an den Auslassabschnitt angeschlossen.

Beispielsweise kann Wasser in den Einlassabschnitt eintreten um zur Kammer gelangen, um daraufhin zum Auslassabschnitt zu gelangen und schließlich aus dem Auslassabschnitt auszutreten. Es ist möglich, dass die Kammer eine Kanalstruktur bildet, um einen Filtrationsweg über das Filtrationsmittel zu bereitzustellen. Beispielsweise kann die Kammer mehrere Bereiche aufweisen. Beispielsweise kann die Kammer zwei oder mehr Unterkammern aufweisen, die über einen oder mehrere Durchgänge miteinander verbunden sind.

Der Zugangsabschnitt ist insbesondere zur Bereitstellung eines Zugangs zur Kammer eingerichtet. Der Zugangsabschnitt ist beispielsweise zumindest 1 cm groß. Der Zugangsabschnitt kann zumindest bereichsweise oder vollständig dadurch gebildet sein, dass das Gehäuse demontierbar ausgebildet ist. Beispielsweise kann das Gehäuse auseinander geschraubt bzw. auseinander genommen werden, um Zugriff zur Kammer zu erhalten. Es ist möglich, dass das Gehäuse selbst einen Deckel bereitstellt und/oder dass der Deckel als ein Teil, ein Abschnitt oder ein Bereich des Gehäuses ausgebildet ist. Beispielsweise ist es möglich, dass das Gehäuse den Deckel aufweist.

Lösbares Verschließen soll bedeuten, dass der Zugangsabschnitt insbesondere zerstörungsfrei verschlossen und/oder geöffnet werden kann. Beispielsweise kann das Gehäuse selbst demontiert werden, um es zu öffnen und wieder schließen zu können. Mit Vorteil kann der Deckel für das Öffnen und Verschließen vorgesehen sein, beispielsweise als Schraubverschluss. Insbesondere mittels des Deckels kann der Zugangsabschnitt lösbar verschlossen werden. Der Deckel kann zum lösbaren Verschließen beispielsweise am Zugangsabschnitt angebracht und vom Zugangsabschnitt abgenommen werden. Beispielsweise kann der Deckel verwendet werden, um dem Zugangsabschnitt dicht zu verschließen. Das Gehäuse selbst kann auch den Deckel bereitstellen und/oder öffenbar bzw. schließbar ausgebildet sein, um insbesondere im Bereich des Zugangsabschnitts öffenbar bzw. schließbar ausgebildet sein. Vorzugsweise ist der Deckel separat vom Gehäuse ausgebildet. Der Deckel kann aber auch zusammen mit dem Gehäuse ausgebildet sein, beispielsweise monolithisch mit dem Gehäuse geformt und/oder mit dem Gehäuse verbunden sein. Der Deckel kann exemplarisch am Zugangsabschnitt befestigt und davon wieder gelöst werden, um den Zugangsabschnitt zu verschließen und zu öffnen. Der Deckel ist beispielsweise größer als der Zugangsabschnitt ausgebildet, um den Zugangsabschnitt verschließen zu können.

Der Deckel wird formschlüssig und/oder kraftschlüssig mit dem Gehäuse verbunden. Beispielsweise ist der Deckel am Gehäuse verschraubbar, verklipsbar, einsetzbar, arretierbar, montierbar und/oder dergleichen. Der Deckel kann über einen oder mehrere Hebel am Gehäuse festgelegt werden. Der Deckel kann als Klappdeckel ausgebildet sein. Das Gehäuse selbst kann auch entsprechend ausgebildet sein, um es zu öffnen und zu verschließen.

Die Filtervorrichtung weist zumindest eine Dichtung auf.

Die Dichtung ist ringförmig und/oder als O-Ring-Dichtung ausgebildet. Die Dichtung ist flexibel ausgebildet. Die Dichtung ist eine elastische Dichtung, die zwischen Metallwerkstoffen und/oder Polymerzusammensetzungen abdichten kann. Die Dichtung ist trinkwassergeeignet ausgebildet Der Einlassabschnitt und der Auslassabschnitt können miteinander und/oder nebeneinander ausgebildet sein. Der Zugangsabschnitt ist insbesondere separat, bevorzugt abgewandt und/oder gegenüberliegend, vom Einlassabschnitt und/oder Auslassabschnitt angeordnet. Beispielsweise sind Einlass- und/oder Auslassabschnitt an einer Unterseite und der Zugangsabschnitt abseits von der Unterseite, bevorzugt an einer Oberseite des Gehäuses angeordnet.

Vorzugsweise ist die Filtervorrichtung, bevorzugt das Gehäuse und/oder der Deckel und/oder andere Teile der Filtervorrichtung, zumindest im Wesentlichen starr ausgebildet und/oder mit bzw. aus einem Metallwerkstoff und/oder mit bzw. aus einer, bevorzugt duroplastischen und/oder thermoplastischen, Polymerzusammensetzung gebildet.

Der Einlassabschnitt und der Auslassabschnitt können auf einer ersten Seite der Filtervorrichtung vorgesehen sein. Der Zugangsabschnitt kann abseits von der ersten Seite und/oder auf einer der ersten Seite gegenüberliegenden zweiten Seite der Filtervorrichtung vorgesehen sein. Insbesondere können der Einlassabschnitt und der Auslassabschnitt gegenüberliegend vom Zugangsabschnitt angeordnet sein.

Beispielsweise sind der Einlassabschnitt und der Auslassabschnitt an einer Unterseite und der Zugangsabschnitt ist an einer Oberseite der Filtervorrichtung angeordnet. Es ist auch möglich, dass der Einlassabschnitt und der Auslassabschnitt gegenüberliegend und/oder abgewandt voneinander angeordnet sind. Beispielsweise ist die Kammer und/oder der Zugangsabschnitt zwischen dem Einlassabschnitt und dem Auslassabschnitt angeordnet. Insbesondere ist die Kammer zwischen dem Zugangsabschnitt und dem Einlassabschnitt und/oder dem Auslassabschnitt angeordnet.

Es ist auch möglich, dass der Zugangsabschnitt die Kammer zumindest im Wesentlichen umgibt. Beispielsweise kann das Gehäuse auseinander genommen bzw. demontiert werden, beispielsweise auseinandergeschraubt werden, insbesondere wobei die Kammer abschnittsweise in den demontierten Gehäuseteilen angeordnet ist.

Der Einlassabschnitt kann zumindest im Wesentlichen ringförmig ausgebildet sein und insbesondere den Auslassabschnitt umgeben. Der Auslassabschnitt kann im Wesentlichen zentral im Einlassabschnitt ausgebildet sein. Der Einlassabschnitt kann beispielsweise umlaufend um den Auslassabschnitt ausgebildet sein. Der Einlassabschnitt kann den Auslassabschnitt abschnittsweise oder vollständig umgeben bzw. um diesem geformt sein. Ringförmig kann sich einer Kreisform annähern oder davon abweichen, beispielsweise eckige oder polygonförmige Abschnitte aufweisen. Ringförmig bezieht sich z.B. auf eine zumindest im Wesentlichen umlaufende Form. Insoweit kann eine kompakte Filtervorrichtung geschaffen werden.

Die Filtervorrichtung kann zumindest einen Filtereinsatz aufweisen. Der Filtereinsatz kann beispielsweise ein Vlies, ein Gewebe, ein Geflecht, ein Sieb und/oder dergleichen aufweisen. Der Filtereinsatz kann ein metallischer Filtereinsatz sein, beispielsweise teilweise oder vollständig aus einem Metallwerkstoff gebildet sein. Insbesondere ist als Metallwerkstoff ein Stahlwerkstoff, beispielsweise hochlegierter Stahl und/oder Edelstahl, vorgesehen. Die Filtervorrichtung kann einen ersten Filtereinsatz aufweisen, der dem Einlassabschnitt zugeordnet ist und insbesondere zwischen dem Einlassabschnitt und der Kammer angeordnet ist. Die Filtervorrichtung kann einen zweiten Filtereinsatz aufweisen, der dem Auslassabschnitt zugeordnet ist und insbesondere zwischen der Kammer und dem Auslassabschnitt angeordnet ist. Beispielsweise kann die Kammer zwischen zwei Filtereinsätzen eingegrenzt sein, um Austritt von Filtrationsmittel aus der Kammer und Eintritt von groben Verunreinigungen in die Kammer zu verhindern. Beispielsweise ist der Filtereinsatz zur Filtration von bestimmten Partikelgrößen oberhalb ausgebildet. Beispielsweise kann der Filtereinsatz Partikelgrößen von mehr als 1 mm oder mehr als 0,5 mm oder mehr als 0,25 mm oder mehr als 0,1 mm oder mehr als einem geringeren Wert als 0,1 mm filtern bzw. weist eine entsprechende Maschenweite auf.

Das Gehäuse kann ein Außenteil und ein Innenteil aufweisen. Das Innenteil kann zumindest abschnittsweise in dem Außenteil bzw. darin angeordnet sein. Beispielsweise kann das Innenteil zumindest im Wesentlichen koaxial zum Außenteil angeordnet sein. Das Außenteil kann zumindest eine äußere Oberfläche der Filtervorrichtung bereitstellen. Die Kammer kann zumindest abschnittsweise oder vollständig zwischen dem Innenteil und dem Außenteil bereitgestellt bzw. geformt sein. Beispielsweise kann ein Filtereinsatz an dem Innenteil und/oder dem Außenteil festgelegt sein. Das Außenteil und/oder das Innenteil ist vorzugsweise zumindest im Wesentlichen zylindrisch ausgebildet. Das Innenteil und/oder das Außenteil kann/können zumindest abschnittsweise den Auslassabschnitt bereitstellen. Beispielsweise kann der Einlassabschnitt oder der Auslassabschnitt, bevorzugt im Wesentlichen ringförmig und bevorzugt zumindest abschnittsweise, zwischen dem Innenteil und dem Außenteil gebildet sein. Beispielsweise kann der Einlassabschnitt bzw. der Auslassabschnitt, zumindest abschnittsweise, durch das Innenteil gebildet sein.

Das Innenteil und/oder das Außenteil kann/können hohl ausgebildet sein. Das Innenteil und/oder das Außenteil kann/können zumindest eine Öffnung aufweisen, beispielsweise zwei Öffnungen an gegenüberliegenden Seiten, beispielsweise um den Zugangsabschnitt, der Einlassabschnitt und/oder den Auslassabschnitt, oder jeweils einen Abschnitt davon, zu bilden.

Die Filtervorrichtung kann ein Adapterteil aufweisen. Das Adapterteil kann zum direkten Verbinden mit dem Wassertank und/oder mit der Getränkezubereitungsanlage vorgesehen sein, insbesondere seitens des Auslassabschnitts. Das Adapterteil kann am Gehäuse festgelegt sein, insbesondere am Innenteil und/oder am Außenteil. Es kann zumindest eine insbesondere ringförmige Dichtung zwischen dem Adapterteil und dem Gehäuse vorgesehen sein.

Es kann ein Zwischenstück zwischen Adapterteil und Gehäuse vorgesehen sein.

Das Adapterteil und/oder das Zwischenstück kann/können zur Befestigung von dem zumindest einen Filtereinsatz vorgesehen sein. Beispielsweise kann der Filtereinsatz mittels, insbesondere ringförmigem, Halteelement gehalten sein.

Das Gehäuse und das Adapterteil können, insbesondere direkt, ineinander eingesetzt sein und/oder miteinander verbunden sein. Das Adapterteil kann zumindest eine Aufnahme für das Gehäuse aufweisen. Beispielsweise können das Adapterteil und das Gehäuse lösbar miteinander verbunden bzw. verbindbar sein. Das Adapterteil kann zumindest abschnittsweise den Auslassabschnitt und/oder den Einlassabschnitt bereitstellen. Das Adapterteil kann zumindest einen Einlassdurchgang und/oder zumindest einen Auslassdurchgang bereitstellen.

Das Adapterteil kann zumindest im Wesentlichen ringförmig und/oder rund ausgebildet sein. Das Adapterteil kann ein Drehteil, ein Umformteil und/oder ein Spritzgussteil sein. Diese Bauweise kann die Reinigung der Filtervorrichtung und das Auswechseln von Filtrationsmittel erleichtern und die Kompatibilität erhöhen.

Der Zugangsabschnitt kann zumindest abschnittsweise zwischen dem Außenteil und dem Innenteil und/oder zumindest abschnittsweise durch das Innenteil oder durch das Außenteil gebildet sein. Beispielsweise bilden Außenteil und Innenteil zwischeneinander eine Öffnung, in das das Filtrationsmittel eingegeben werden kann bzw. aus der das Filtrationsmittel herausgenommen werden kann. Es ist möglich, dass nur das Außenteil oder nur das Innenteil den Zugangsabschnitt bildet. Der Zugangsabschnitt ist beispielsweise rund, kreisförmig und/oder ringförmig geformt bzw. eingegrenzt. Der Zugangsabschnitt kann am Gehäuse umlaufend ausgebildet sein. Es kann ein ergonomischer Zugang zur Kammer ermöglicht werden.

Die Filtervorrichtung kann das Zwischenstück aufweisen. Das Zwischenstück kann am Gehäuse, insbesondere am Innenteil, festgelegt bzw. festzulegen sein. Das Zwischenstück kann, insbesondere gegenüberliegend vom Gehäuse, am Adapterteil festgelegt bzw. festzulegen sein. Beispielsweise ist das Zwischenstück am Gehäuse verschraubbar/verschraubt und/oder mit diesem, insbesondere lösbar, verbindbar bzw. verbunden. Das Zwischenstück kann in das Gehäuse, insbesondere in das Innenteil und/oder das Außenteil, eingesetzt sein. Beispielsweise ist das Zwischenstück mit dem Adapterteil verschraubbar/verschraubt und/oder mit diesem, insbesondere lösbar, verbindbar bzw. verbunden. Das Zwischenstück und das Adapterteil können zueinander korrespondierende Eingriffsmittel, beispielsweise Gewinde, aufweisen.

Das Zwischenstück kann einen inneren Kanal, insbesondere seitens des Auslassabschnitts, aufweisen. Beispielsweise handelt es sich bei dem inneren Kanal um eine Bohrung oder mehrere Bohrungen. Der innere Kanal kann zur fluidischen Verbindung der Kammer mit dem Einlassabschnitt oder dem Auslassabschnitt ausgebildet sein. Der innere Kanal kann im Auslassdurchgang münden. Insbesondere sind das Innenteil und/oder das Außenteil und das Adapterteil miteinander verbunden, beispielsweise formschlüssig und/oder kraftschlüssig. Es kann zumindest eine insbesondere ringförmige Dichtung zwischen dem Zwischenstück und dem Gehäuse und/oder zwischen dem Zwischenstück und dem Adapterteil vorgesehen sein.

Das Außenteil kann seitlich erweitert sein bzw. eine Bauchung aufweisen. Das Außenteil ist insbesondere zwischen der ersten und der zweiten Seite seitlich zum Innenteil erweitert, um einen auskragenden Abschnitt der Kammer auszubilden. Der auskragende Abschnitt erstreckt sich beispielsweise in eine Seitenrichtung. Diese Erweiterung kann die Kammer in eine zumeist nicht störende Richtung vergrößern. Der auskragende Abschnitt der Kammer kann durch, insbesondere gegenüberliegende, Wandabschnitte des Gehäuses bzw. des Außenteils gebildet sein. Beispielsweise kann auf diese Weise die Höhe der Filtervorrichtung gering gehalten werden, um bei flachen Getränkezubereitungsanlagen einsetzbar zu sein.

Das Gehäuse bzw. das Innenteil kann einen oder mehrere Radialdurchgänge aufweisen, beispielsweise von dem/denen zumindest ein erster Radialdurchgang seitens der ersten Seite und/oder des Einlassabschnitts und/oder von dem/denen zumindest ein zweiter Radialdurchgang seitens der zweiten Seite, seitens des Zugangsabschnitts und/oder seitens des Deckels angeordnet ist. Beispielsweise ist der Radialdurchgang als im Wesentlichen radial verlaufende Bohrung und/oder als ein sich im Wesentlichen radial erstreckender Ausschnitt ausgebildet. Über derartige Radialdurchgänge kann insbesondere der auskragende Abschnitt der Kammer fluidisch an die Einlass- bzw. Auslassabschnitte abgeschlossen sein, um darin enthaltenes Filtrationsmittel zu durchspülen.

Die Filtervorrichtung, beispielsweise der Deckel, kann eine Deckelplatte aufweisen. Mit der Deckelplatte dann der Zugangsabschnitt, beispielsweise bereichsweise, verschlossen werden. Die Deckelplatte kann einen Durchgang aufweisen, beispielsweise für das Innenteil und/oder den Deckel. Die Deckelplatte kann zur Auflage auf und/oder zum Anliegen an dem dem Außenteil vorgesehen sein, insbesondere um den Zugangsabschnitt im Abschnitt zwischen dem Außenteil und dem Innenteil zu bedecken. Die Deckelplatte kann mit einer oder mehreren Dichtungen zur Abdichtung gegenüber dem Gehäuse versehen sein. Die Deckelplatte kann ein Teil des Deckels sein oder zusammen mit dem Deckel geformt sein. Zum Verschließen des Zugangsabschnitts kann der Deckel sich durch den Durchgang der Deckelplatte erstrecken, beispielsweise um auf der Deckelplatte aufzuliegen und um einen Formschluss mit dem Gehäuse einzugehen. Alternativ oder ergänzend kann sich das Innenteil durch den Durchgang der Deckelplatte erstrecken, beispielsweise damit der Deckel daran befestigt werden kann und von außen auf die Deckelplatte aufdrücken kann.

Es ist möglich, dass das Innenteil an der zweiten Seite bzw. an einer Oberseite und/oder in einer von der ersten Seite bzw. einer Unterseite abgewandten Richtung das Außenteil überragt. Beispielsweise steht das Innenteil aus dem Außenteil heraus. Ein Bereich zwischen Innenteil und Außenteil kann von der Deckelplatte verschlossen werden, wobei ergänzend der Deckel das Innenteil verschließen kann. Der Deckel kann ergänzend die Deckelplatte fixieren und/oder andrücken und/oder gegen diese abdichten.

Das Gehäuse kann zumindest einen Verbindungsabschnitt bereitstellen. Das Gehäuse und/oder der Deckel kann einen mit dem Verbindungsabschnitt formschlüssig verbindbaren weiteren Verbindungsabschnitt bereitstellen. Der Verbindungsabschnitt des Gehäuses kann an dem Innenteil oder an dem Außenteil bereitgestellt sein. Beispielsweise ist der weitere Verbindungsabschnitt innen am Deckel, z.B. als Innengewinde, und/oder der Verbindungsabschnitt außen am Gehäuse, z.B. als Außengewinde, vorgesehen. Es ist auch möglich, dass das Gehäuse über zueinander korrespondierende Verbindungsabschnitte des Gehäuses in sich verbindbar bzw. demontierbar ausgebildet ist, beispielsweise um den Zugangsabschnitt zu öffnen und/oder zu verschließen. Beispielsweise können zwei Gehäuseteile so miteinander verbunden bzw. voneinander getrennt werden.

Die Verbindungsabschnitte sind insbesondere zur formschlüssigen Verbindung miteinander eingerichtet. Beispielsweise weisen Deckel und Innenteil bzw. Außenteil jeweils einen Verbindungsabschnitt auf, wobei die Verbindungsabschnitte zueinander korrespondieren. Die Verbindungsabschnitte können als Gewinde ausgebildet sein und/oder einen Bajonettverschluss, Klemmverschluss, Klipsverschluss, Steckverschluss und/oder dergleichen bereitstellen.

Der Deckel und/oder das Gehäuse kann einen Griffabschnitt zum händischen Eingreifen aufweisen, beispielsweise zum Herausziehen der Filtervorrichtung aus dem Wassertank. Der Griffabschnitt kann eine Öse und/oder ein Griff sein.

Die Filtervorrichtung, insbesondere der Deckel und/oder das Gehäuse, können Metallwerkstoff(e) aufweisen oder daraus bestehen. Bevorzugt weisen das Außenteil, das Innenteil, das Zwischenstück und/oder das Adapterteil einen/den Metallwerkstoff auf oder bestehen daraus. Vorzugsweise wird ein einheitlicher Metallwerkstoff für die Teile der Filtervorrichtung verwendet, d.h. eine bestimmte Metalllegierung. Insbesondere ist der Metallwerkstoff ein Stahlwerkstoff, beispielsweise hochlegierter Stahl und/oder Edelstahl. Der Metallwerkstoff kann Aluminium bzw. eine Aluminiumlegierung aufweisen. Der Metallwerkstoff kann Kupfer bzw. eine Kupferlegierung, insbesondere Messing, aufweisen. Vorzugsweise kann der Metallwerkstoff galvanisiert bzw. eloxiert, mit Kunststoff beschichtet und/oder lebensmittelkonform bzw. geeignet für Trinkwasser beschichtet sein. Es ist auch möglich, dass teilweise Metallwerkstoff(e) und teilweise Polymerzusammensetzung(en) bzw. Kunststoff(e) eingesetzt werden. Insbesondere besteht die Filtervorrichtung zu zumindest 10 Gewichtsprozent, vorzugsweise zu zumindest 50 Gewichtsprozent, insbesondere zu zumindest 80 Gewichtsprozent oder mehr aus Metallwerkstoff.

Durch die Verwendung von Metallwerkstoff kann die Langlebigkeit der Filtervorrichtung weiter verbessert werden. Polymerzusammensetzungen bzw. Kunststoffe sind regelmäßig kurzlebiger als Metallwerkstoffe. Beispielsweise ist Metallwerkstoff leicht zu reinigen, ist besonders robust gegenüber äußeren Einflüssen (z.B. Druck, Temperatur, Stöße) und ist zumeist spülmaschinengeeignet. Beispielsweise kann durch eine Reduktion des Einsatzes von Kunststoffen durch Einsatz von Metallwerkstoffen die Abgabe von Stoffen aus den Kunststoffen in das Wasser verringert und der Geschmack des Wassers verbessert werden. Die Abgabe von hormonell wirkenden Chemikalien aus Kunststoff in das Wasser kann durch vermehrten Einsatz von Metallwerkstoffen reduziert werden.

Vorgeschlagen wird weiter eine Verwendung einer/der Filtervorrichtung in einer/der Getränkezubereitungsanlage. Vorgeschlagen wird insbesondere, dass die Filtervorrichtung zur Filtration von in einem Wassertank einer Getränkezubereitungsanlage enthaltenem Wasser bei der Zubereitung von einem Getränk verwendet wird. Insbesondere ist ein Filtrationsmittel in der Filtervorrichtung anzuordnen bzw. angeordnet. Die Getränkezubereitungsanlage ist insbesondere zum Ansaugen des Wassers aus dem Auslassabschnitt eingerichtet. Beispielsweise wird bei der Verwendung das Wasser angesaugt. Insbesondere kann die Filtervorrichtung zum Filtern von Trinkwasser verwendet werden.

Vorgeschlagen wird weiter ein System mit der Filtervorrichtung und mit dem Filtrationsmittel. Das Filtrationsmittel kann in der Filtervorrichtung angeordnet sein und/oder von der Filtervorrichtung verpackt bereitgestellt sein. Vorgeschlagen wird weiter eine Getränkezubereitungsanlage mit der Filtervorrichtung oder mit dem System.

Vorgeschlagen wird weiter ein Verfahren zum Wiederaufbereiten einer/der Filtervorrichtung. Der Zugangsabschnitt kann geöffnet werden. Es kann ein Deckel der Filtervorrichtung von einem Zugangsabschnitt der Filtervorrichtung abgenommen werden bzw. der Zugangsabschnitt mittels Lösen des Deckels geöffnet werden. Es kann ein verbrauchtes Filtrationsmittel über den Zugangsabschnitt aus der Filtervorrichtung entnommen werden. Es kann ein neues Filtrationsmittel über den Zugangsabschnitt in die Filtervorrichtung eingebracht werden. Der Zugangsabschnitt kann, insbesondere lösbar bzw. reversibel, verschlossen werden. Der Zugangsabschnitt kann insbesondere mittels des Deckels verschlossen werden, insbesondere unter Bereitstellung eines Formschlusses und/oder Kraftschlusses zwischen Deckel und Zugangsabschnitt.

Verbrauchtes Filtrationsmittel ist beispielsweise zu erneuerndes und/oder gealtertes Filtrationsmittel. Neues Filtrationsmittel ist beispielsweise Filtrationsmittel, das sich zur Filtration von Trinkwasser eignet bzw. noch nicht verbraucht ist. Beispielsweise kann das verbrauchte Filtrationsmittel aus dem Zugangsabschnitt herausgeschüttet und das neue Filtrationsmittel in den Zugangsabschnitt eingeschüttet werden. Wiederaufbereiten meint beispielsweise das Erneuern des Filtrationsmittels. Es ist möglich, dass die Filtervorrichtung bei dem Verfahren gereinigt wird, z.B. ausgespült. Insbesondere gelingt das Erneuern von Filtrationsmittel bei der vorliegend vorgeschlagenen Filtervorrichtung besonders einfach und ressourcensparend.

Vorgeschlagen wird weiter ein Verfahren zum Herstellen einer/der Filtervorrichtung insbesondere zur Aufnahme von Filtrationsmittel und zur Verwendung in einem Wassertank einer Getränkezubereitungsanlage, insbesondere eines Kaffeevollautomaten. Insbesondere umfasst das Verfahren
Bereitstellen eines/des Gehäuses und vorzugsweise des Deckels,
wobei das Gehäuse und vorzugsweise der Deckel zumindest teilweise metallbearbeitend, und/oder
wobei das Gehäuse und vorzugsweise der Deckel durch einen Umformprozess und/oder Urformprozess und/oder thermischen Fügeprozess und/oder Trennprozess bereitgestellt wird.

Ein Verfahren zum Herstellen einer/der Filtervorrichtung umfasst beispielsweise
Bereitstellen eines Gehäuses mit einem Einlassabschnitt, einem Auslassabschnitt, einem Zugangsabschnitt und einer mit dem Einlassabschnitt, dem Auslassabschnitt und dem Zugangsabschnitt fluidisch verbundenen Kammer zur Aufnahme von einem/dem Filtrationsmittel, wobei das Gehäuse zum Öffnen und/oder zum Schließen des Zugangsabschnitts eingerichtet ist, und optional
Bereitstellen eines Deckels zum lösbaren Verschließen des Zugangsabschnitts, wobei
das Gehäuse und vorzugsweise der Deckel durch einen Umformprozess und/oder Urformprozess und/oder thermischen Fügeprozess und/oder Trennprozess bereitgestellt bzw. hergestellt wird, und insbesondere
die Filtervorrichtung und vorzugsweise der Deckel zumindest teilweise metallbearbeitend hergestellt bzw. bereitgestellt wird.

Durch Metallbearbeitung bzw. Umformprozesse, Urformprozesse, thermische Fügeprozesse und/oder Trennprozesse können besonders robuste und langlebige Filtervorrichtungen hergestellt werden. Umformen bzw. ein Umformprozess umfasst insbesondere Druckumformen, Zugdruckumformen, Zugumformen, Biegeumformen und/oder Schubumformen. Urformen bzw. ein Urformprozess umfasst insbesondere Gießen, Spritzguss, Pulvermetallurgie und/oder additive Fertigungsverfahren. Thermisches Fügen bzw. ein thermischer Fügeprozess umfasst insbesondere Fügen durch Schweißen und/oder Fügen durch Löten. Es ist auch möglich, dass die Filtervorrichtung zumindest teilweise und/oder bereichsweise durch Trennen hergestellt wird, beispielsweise durch Spanen, z.B. Drehen, Fräsen und/oder Schleifen, und/oder durch Abtragen.

Die genannte Reihenfolge an Verfahrensschritten ist bevorzugt. Die Reihenfolge der Verfahrensschritte, soweit technisch möglich, kann variieren.

Beispielsweise können Teile der Filtervorrichtung als Ziehteil, Drehteil, Umformteil, Frästeil, Schweißkonstruktion, 3D-Druckteil, Spritzgussteil, als Kombination davon, und/oder anderen Fertigungsprozessen gebildet sein.

Soweit Ordinalzahlen, z. B. "erste", "zweite" usw., verwendet werden, um beispielsweise eine Komponente, ein Element, einen Verfahrensschritt oder eine Verfahrensoperation zu bezeichnen, dienen diese Ordinalzahlen ausschließlich der Unterscheidung in der Bezeichnung und geben keine Abhängigkeiten oder Reihenfolgen an. Dies bedeutet insbesondere, dass eine Vorrichtung nicht notwendigerweise eine "erste Komponente" aufweisen muss, um eine "zweite Komponente" aufzuweisen. Ebenso kann eine Vorrichtung eine "erste Komponente" sowie eine "dritte Komponente" aufweisen, ohne notwendigerweise eine "zweite Komponente" zu haben. Es können auch mehrere Einheiten derselben Ordinalzahl vorhanden sein, einschließlich beispielsweise mehrerer "erster Komponenten".

Im Rahmen der Offenbarung steht die Abkürzung "bzw." als eine Kurzform für "beziehungsweise" und soll grundsätzlich alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" und "oder" können mit "und/oder" ersetzt werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1: eine schematische Darstellung einer Getränkezubereitungsanlage,
- Fig. 2-9: Ansichten eines ersten Ausführungsbeispiels einer Filtervorrichtung,
- Fig. 10-19: Ansichten eines zweiten Ausführungsbeispiels einer Filtervorrichtung.

Bei in den Figuren verwendeten gleichen Bezugszeichen gilt die nachfolgende Beschreibung entsprechend für die Figuren untereinander.

Die beschriebenen Ausführungsbeispiele sind lediglich Beispiele, die im Rahmen der Ansprüche in verschiedenen Weisen modifiziert und/oder ergänzt werden können. Jedes Merkmal, das für ein bestimmtes Ausführungsbeispiel beschrieben wird, kann unabhängig oder in Kombination mit anderen Merkmalen in jedem anderen Ausführungsbeispiel verwendet werden. Jedes Merkmal, das für ein Ausführungsbeispiel einer bestimmten Anspruchskategorie beschrieben wird, kann auch in entsprechender Weise in einem Ausführungsbeispiel, beispielsweise einer anderen Anspruchskategorie bzw. einem anderen Aspekt der Erfindung, verwendet werden.

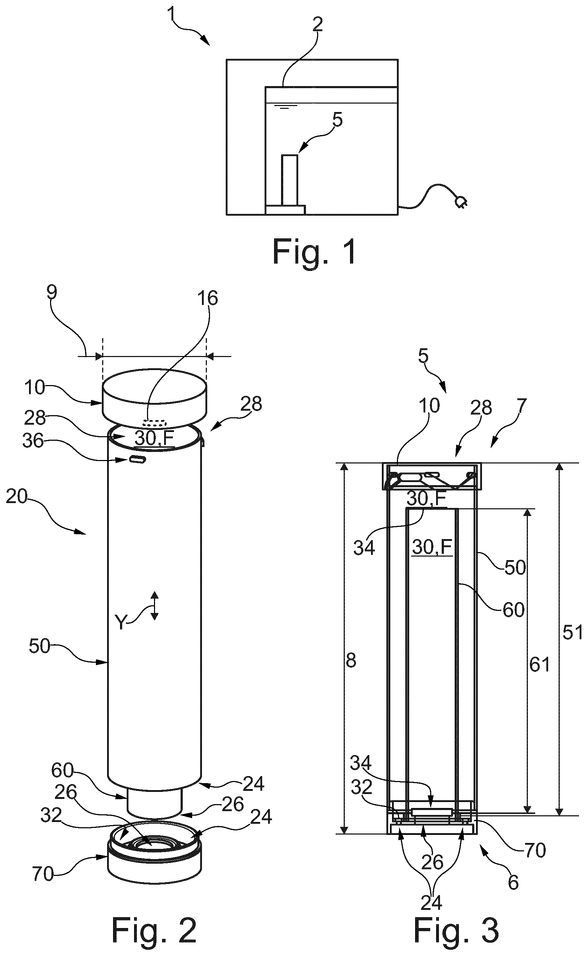

**Fig. 1** zeigt eine Getränkezubereitungsanlage 1, die als Kaffeevollautomat ausgebildet ist. Exemplarisch ist eine elektrische Anschlussleitung der Getränkezubereitungsanlage 1 dargestellt, um die Getränkezubereitungsanlage 1 mit elektrischer Energie zu versorgen, beispielsweise über eine Steckdose.

Die Getränkezubereitungsanlage 1 weist einen Wassertank 2 auf, der Wasser bzw. Trinkwasser enthält. In dem Wassertank 2 ist eine Filtervorrichtung 5 angeordnet, mittels der von der Getränkezubereitungsanlage 1 angesaugtes Wasser filtriert wird. In der Filtervorrichtung 5 ist exemplarisch ein als Granulat ausgebildetes Filtrationsmittel F enthalten, das nicht detailliert gezeigt ist.

Es wird vorgeschlagen, zumindest 25 Gramm und/oder höchstens 500 Gramm des Filtrationsmittels F in einer Filtervorrichtung 5 anzuordnen.

Der Wassertank 2 kann aus der Getränkezubereitungsanlage 1 entnommen werden, insbesondere zusammen mit der Filtervorrichtung 5, beispielsweise um Wasser einzufüllen und/oder die Filtervorrichtung 5 zu erneuern bzw. wiederaufzubereiten. Beispielsweise kann der Wassertank 2 an einer Oberseite mit Wasser befüllt werden.

Optional kann die Filtervorrichtung 5 aus dem Wassertank 2 entnommen werden, wenn der Wassertank 2 an der Getränkezubereitungsanlage 1 montiert ist.

Insbesondere ist die Filtervorrichtung 5 in das im Wassertank 2 enthaltene Wasser zumindest teilweise und typischerweise, wie vorliegend, vollständig eingetaucht. Bei einem Wasserverbrauch durch die Getränkezubereitungsanlage 1 kann ein Wasserpegel sinken, insbesondere so dass die Filtervorrichtung teilweise eingetaucht ist bzw. abschnittsweise oberhalb und abschnittsweise unterhalb einer Wasseroberfläche angeordnet ist.

Es ist möglich, dass die Filtervorrichtung 5 entlüftet werden kann, wenn diese in Wasser eingetaucht ist. Beispielsweise kann ein in Fig. 1 nicht detailliert gezeigter Deckel der Filtervorrichtung 5 gelöst und/oder abgenommen werden, um Luft entweichen zu lassen. Es ist möglich, dass ein Entlüftungsventil an der Filtervorrichtung vorgesehen ist, beispielsweise das bei Überdruck in der Filtervorrichtung 5 öffnet und bei Unterdruck in der Filtervorrichtung 5 geschlossen ist/bleibt, um ein automatisches Entlüften zu ermöglichen.

Die Getränkezubereitungsanlage 1 kann aus einem Auslassabschnitt der Filtervorrichtung 5 filtriertes Wasser ansaugen, wobei unfiltriertes Wasser direkt aus dem Wassertank 2 in einen Einlassabschnitt der Filtervorrichtung 5 angesaugt wird.

Die Filtervorrichtung 5 ist in den Wassertank 2 eingesetzt, beispielsweise auf einen Stutzen des Wassertanks 2 aufgesetzt.

Vorliegend sind Auslassabschnitt und Einlassabschnitt an einer dem Stutzen zugewandten Unterseite der Filtervorrichtung 5 angeordnet.

Die Filtervorrichtung 5 dichtet gegenüber dem Stutzen ab. Beispielsweise dichtet zumindest der Auslassabschnitt gegenüber der Filtervorrichtung 5 ab.

Die Filtervorrichtung 5 ist als Filterkartusche ausgebildet.

Dargestellt und beschrieben ist eine Verwendung einer Filtervorrichtung 5 in einer Getränkezubereitungsanlage 1. Die Filtervorrichtung 5 wird in einem Wassertank 2 der Getränkezubereitungsanlage 1 bzw. zur Filtration von in dem Wassertank 2 enthaltenem Wasser bei der Zubereitung von einem Getränk verwendet. Ein/das Filtrationsmittel F ist in der Filtervorrichtung 5 anzuordnen oder angeordnet, wobei die Getränkezubereitungsanlage 1 zum Ansaugen des Wassers aus dem Auslassabschnitt eingerichtet ist.

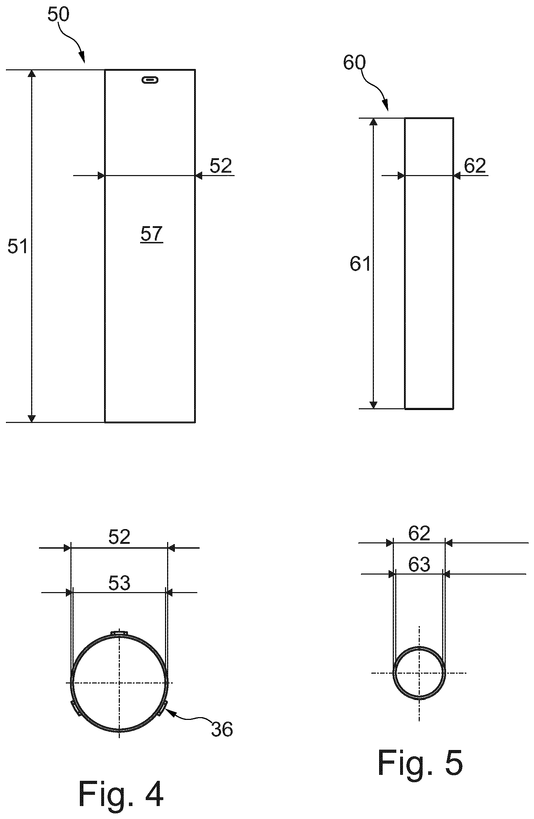

Die Filtervorrichtung 5 aus **Fig. 1** ist beispielsweise in Form eines ersten Ausführungsbeispiels in **Fig. 2** bis **Fig. 9** näher gezeigt und wird nachfolgend näher beschrieben. Insbesondere in **Fig. 4** bis **Fig. 9** sind verschiedene Teile der Filtervorrichtung 5 ausgeblendet bzw. nicht dargestellt.

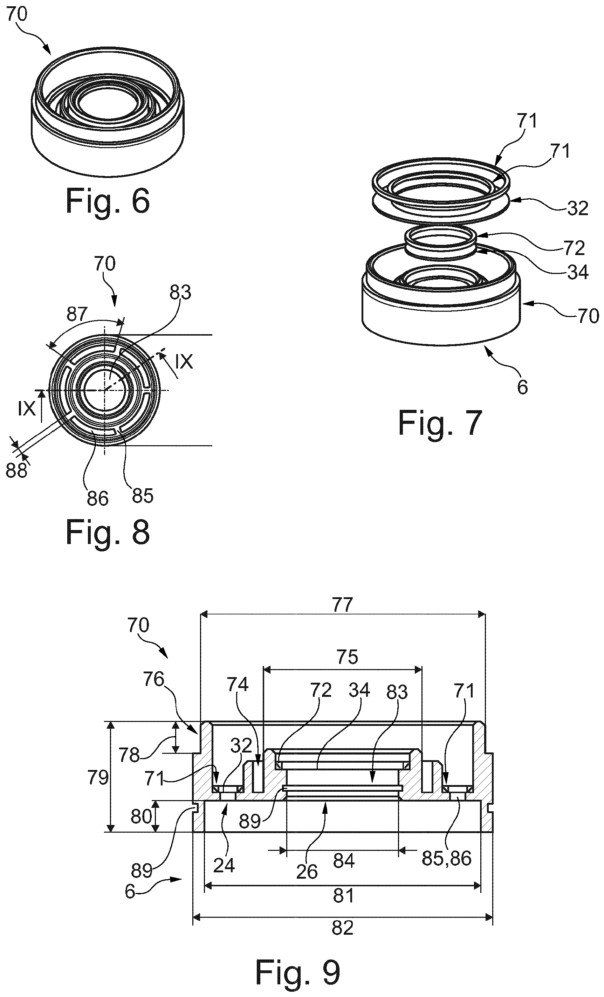

**Fig. 2** zeigt eine Explosionsansicht der Filtervorrichtung 5 und **Fig. 3** eine Schnittansicht der Filtervorrichtung 5. **Fig. 4** oben zeigt eine Seitenansicht, **Fig. 4** unten eine Draufsicht, **Fig. 5** oben zeigt eine Seitenansicht, **Fig. 5** unten zeigt eine Draufsicht, **Fig. 6** zeigt eine perspektivische Ansicht, **Fig. 7** zeigt eine Explosionsansicht in Bezug auf **Fig. 6, Fig. 8** zeigt eine Draufsicht, und **Fig. 9** zeigt eine Schnittansicht in Bezug auf **Fig. 8****.**

Die Filtervorrichtung 5 ist zur Aufnahme von einem Filtrationsmittel F und zur Verwendung in einem Wassertank 2 einer Getränkezubereitungsanlage 1, insbesondere in einem Kaffeevollautomaten, ausgebildet. Die Filtervorrichtung 5 ist insbesondere in einer Hochrichtung Y langgestreckt ausgebildet.

Durch gezielte Einschränkungen von einem oder mehreren Maßen der Filtervorrichtung 5, beispielsweise einer Bauhöhe 8 oder einer Baubreite 9, kann eine Kompatibilität der Filtervorrichtung 5 mit verschiedenen Getränkezubereitungsanlagen 1 erreicht werden. Auch ist es möglich, einen Kompromiss aus nicht zu kleiner und nicht zu großer Größe der Kammer 30 zu erhalten, um eine große Bandbreite an Anforderungen abdecken zu können.

Eine Bauhöhe 8 der Filtervorrichtung 5 beträgt vorzugsweise zumindest 50 mm oder zumindest 75 mm oder zumindest 100 mm und vorzugsweise höchstens 400 mm oder höchstens 250 mm oder höchstens 200 mm oder höchstens 175 mm oder höchstens 150 mm. Vorliegend beträgt die Bauhöhe 8 exemplarisch 150 mm ± 25 mm oder 125 mm ± 25 mm.

Mit Blick auf **Fig. 2** und **Fig. 3** ist ersichtlich, dass die Filtervorrichtung 5 ein Gehäuse 20 mit einem Einlassabschnitt 24, einem Auslassabschnitt 26, einem Zugangsabschnitt 28 und einer mit dem Einlassabschnitt 24, dem Auslassabschnitt 26 und dem Zugangsabschnitt 28 fluidisch verbundenen Kammer 30 zur Aufnahme des Filtrationsmittels F aufweist.

Die Filtervorrichtung 5 ist zum Öffnen und zum Verschließen des Zugangsabschnitts eingerichtet. Die Filtervorrichtung 5 weist einen Deckel 10 auf, der zum Zugangsabschnitt 28 korrespondiert bzw. der für den Zugangsabschnitt 28 vorgesehen ist. Der Deckel 10 kann vorliegend mittels Bajonettverschluss angebracht und wieder gelöst werden.

Eine Baubreite 9 der Filtervorrichtung 5 entspricht im Wesentlichen einem Durchmesser des Deckels 10. Beispielsweise überragt der Deckel 10 den Rest der Filtervorrichtung 5 seitlich. Der Deckel 10 ist vorliegend zumindest im Wesentlichen rund und/oder zylindrisch ausgebildet. Mittels des Deckels 10 kann der Zugangsabschnitt 28 lösbar verschlossen werden. Wenn der Deckel 10 abgenommen ist, kann Filtrationsmittel F durch den Zugangsabschnitt 28 in die Kammer 30 eingebracht bzw. herausgeholt werden. Beispielsweise kann schüttfähiges Filtrationsmittel F eingeschüttet bzw. ausgeschüttet werden.

Der Einlassabschnitt 24 und der Auslassabschnitt 26 sind auf einer ersten Seite 6 der Filtervorrichtung 5 vorgesehen, wobei der Zugangsabschnitt 28 auf einer der ersten Seite 6 gegenüberliegenden zweiten Seite 7 der Filtervorrichtung 5 vorgesehen ist. Der Einlassabschnitt 24 ist zumindest im Wesentlichen ringförmig ausgebildet und umgibt den Auslassabschnitt 26.

Die Filtervorrichtung 5 weist einen dem Einlassabschnitt 24 zugeordneten ersten metallischen Filtereinsatz 32 auf, der ferner zwischen dem Einlassabschnitt 24 und der Kammer 30 angeordnet ist, vgl. **Fig. 2** und **Fig. 3****.**

Die Filtervorrichtung 5 weist dem Auslassabschnitt 26 zugeordneten zweiten metallischen Filtereinsatz 34 auf, der zwischen der Kammer 30 und dem Auslassabschnitt 26 angeordnet ist, vgl. **Fig. 2** und **Fig. 3****.** Alternativ oder ergänzend kann ein weiterer zweiter metallischer Filtereinsatz 34 in der Kammer angeordnet sein, beispielsweise festgelegt auf einem Innenteil 60, vgl. **Fig. 2** und **Fig. 3****.**

Das Gehäuse 20 weist ein im Wesentlichen zylindrisches Außenteil 50 und das im Wesentlichen zylindrische und zumindest abschnittsweise im Außenteil 50 angeordnete Innenteil 60 auf. Das Innenteil 60 ist koaxial zum bzw. mittig im Außenteil 50 angeordnet.

Die Kammer 30 ist zumindest abschnittsweise zwischen dem Innenteil 60 und dem Außenteil 50 bereitgestellt. Die Kammer 30 ist insbesondere abschnittsweise im Innenteil 60 bereitgestellt. Beispielsweise befindet sich im Innenteil 60 eine erste Unterkammer und zwischen dem Innenteil 60 und dem Außenteil 50 eine zweite Unterkammer, die jeweils Filtrationsmittel F aufnehmen können und über einen Durchgang bzw. Übergang seitens der zweiten Seite 7 bzw. des Zugangsabschnitts 28 miteinander verbunden sind.

Das Innenteil 60 stellt abschnittsweise den Auslassabschnitt 26 bereit.

Mit Blick auf **Fig. 2** und **Fig. 3** ist ersichtlich, dass das Gehäuse 20 am Außenteil 50 einen Verbindungsabschnitt 36 in Form von mehreren Vorsprüngen bereitstellt. Der Deckel 10 stellt einen mit dem Verbindungsabschnitt 36 formschlüssig verbindbaren weiteren Verbindungsabschnitt 16 bereit. Die Verbindungsabschnitte 36 sind als Bajonettverschluss ausgebildet, wobei der Deckel 10 auf das Außenteil 50 aufgesetzt und durch Drehen fixiert werden kann, um den Zugangsabschnitt 28 zu verschließen. Ein Drehen in entgegengesetzter Richtung kann zum Lösen des Deckels 10 genutzt werden, so dass der Deckel 10 wieder vom Gehäuse 20 abgehoben werden kann. Der Deckel 10 ist insbesondere ausgebildet, um auf das Gehäuse 20 aufgesetzt zu werden, um das Gehäuse 20 zu verschließen. Der Deckel 10 ist vorliegend mittels Trennen und/oder Umformen hergestellt. Der Deckel 10 weist eine nicht näher gezeigte Dichtung auf.

**Fig. 4** zeigt das Außenteil 50 in zwei Ansichten. Das Außenteil 50 bildet einen Wandabschnitt 57 und mithin eine äußere Oberfläche der Filtervorrichtung 5. Am Außenteil 50 ist der Verbindungsabschnitt 36 festgelegt, beispielsweise Vorsprünge des Bajonettverschlusses, um den Deckel 10 lösbar damit zu verbinden. Die Vorsprünge sind z.B. durch Verschweißen angebracht und/oder durch Umformen erzeugt.

Das Außenteil 50 weist eine Höhe 51 von insbesondere zumindest 50 mm oder zumindest 75 mm oder zumindest 100 mm oder zumindest 125 mm und vorzugsweise höchstens 250 mm oder höchstens 200 mm oder höchstens 175 mm auf. Insbesondere beträgt die Höhe 51 etwa 150 mm ± 15 mm.

Das Außenteil 50 weist einen Durchmesser 52 bzw. Außendurchmesser von insbesondere zumindest 20 mm oder zumindest 30 mm oder zumindest 35 mm und vorzugsweise höchstens 50 mm oder höchstens 40 mm auf. Insbesondere beträgt der Durchmesser 52 etwa 38 mm ± 3 mm.

Das Außenteil 50 weist einen Durchmesser 53 bzw. Innendurchmesser von insbesondere zumindest 20 mm oder zumindest 30 mm oder zumindest 35 mm und vorzugsweise höchstens 50 mm oder höchstens 40 mm auf. Insbesondere beträgt der Durchmesser 53 etwa 36 mm ± 2 mm.

**Fig. 5** zeigt das Innenteil 60 in zwei Ansichten. Das Innenteil 60 kann in das Außenteil 50 eingesetzt werden bzw. hinein und/oder hindurch gesteckt werden. Beispielsweise sind Innenteil 60 und/oder Außenteil 50 wenigstens abschnittsweise als Umform- und/oder Drehteil hergestellt.

Das Innenteil 60 weist eine Höhe 61 von insbesondere zumindest 50 mm oder zumindest 75 mm oder zumindest 100 mm oder zumindest 125 mm und vorzugsweise höchstens 250 mm oder höchstens 200 mm oder höchstens 175 mm auf. Insbesondere beträgt die Höhe 61 etwa 130 mm ± 15 mm. Insbesondere ist das Innenteil 60 kürzer und/oder schmaler als das Außenteil 50.

Das Innenteil 60 weist einen Durchmesser 62 bzw. Außendurchmesser von insbesondere zumindest 10 mm oder zumindest 15 mm oder zumindest 20 mm und vorzugsweise höchstens 40 mm oder höchstens 30 mm auf. Insbesondere beträgt der Durchmesser 62 etwa 22 mm ± 3 mm.

Das Innenteil 60 weist einen Durchmesser 63 bzw. Innendurchmesser von insbesondere zumindest 10 mm oder zumindest 15 mm oder zumindest 20 mm und vorzugsweise höchstens 40 mm oder höchstens 30 mm auf. Insbesondere beträgt der Durchmesser 63 etwa 20 mm ± 2 mm.

Die Filtervorrichtung weist ferner ein am Gehäuse 20 festgelegtes Adapterteil 70 auf, das abschnittsweise den Auslassabschnitt 26 und den Einlassabschnitt 24 bereitstellt. Das Adapterteil 70 ist zumindest im Wesentlichen ringförmig. Das Adapterteil 70 ist vorliegend zumindest abschnittsweise ein Drehteil.

Das Adapterteil 70 dient vorliegend zum Verbinden mit der Getränkezubereitungsanlage 1, insbesondere mit dem Wassertank 2. Das Adapterteil 70 kann eine Steckverbindung mit der Getränkezubereitungsanlage 1 ausbilden. Das Adapterteil 70 kann beispielsweise auf den Stutzen des Wassertanks 2 aufgesetzt werden und insbesondere im Bereich des Auslassabschnitts 26 und/oder im Bereich des Einlassabschnitts 24 gegenüber dem Wassertank 2 abdichten. Das Adapterteil 70 schafft eine sichere Befestigung und Abdichtungsmöglichkeit. Es kann vermieden werden, dass unfiltriertes Wasser direkt aus dem Wassertank 2 zur Getränkezubereitung angesaugt wird.

Mit Blick auf **Fig. 6, Fig. 7, Fig. 8** und **Fig. 9** ist das Adapterteil 70 näher dargestellt.

Das Adapterteil 70 nimmt den vorliegend ringförmigen ersten Filtereinsatz 32 auf, der vorliegend über zwei ringförmige Halteelemente 71 fixiert ist. Der Filtereinsatz 32 deckt einen Einlassdurchgang 86 des Adapterteils 70 ab.

Das Adapterteil 70 nimmt den vorliegend runden zweiten Filtereinsatz 34 auf, der vorliegend über ein ringförmiges Halteelement 72 fixiert ist. Der Filtereinsatz 34 deckt einen Auslassdurchgang 83 ab.

In **Fig. 9** sind die Filtereinsätze 32, 34 besonders flach dargestellt. Die Filtereinsätze 32, 34 fallen hier größenmäßig mit der zeichnerischen Darstellung von Kanten des Adapterteils 70 bzw. der Halteelemente 71, 72 zusammen.

Das Adapterteil 70 weist eine vorliegend runde bzw. ringförmige Aufnahme 74 für das Innenteil 60 auf. Ein Durchmesser 75 der Aufnahme 74 beträgt insbesondere zumindest 10 mm oder zumindest 15 mm und vorzugsweise höchstens 30 mm. Der Durchmesser 75 korrespondiert beispielsweise zum Durchmesser 63 des Innenteils 60 und kann insoweit beispielsweise 20 mm ± 2 mm betragen, insbesondere um eine Übermaßpassung auszubilden, um einen Kraftschluss zu erhalten.

Eine ringförmige Aufnahme 76 kann das Außenteil 50 aufnehmen. Beispielsweise ist die Aufnahme 76 außen am Adapterteil 70 eingebracht, insbesondere als Rücksprung und/oder als Absatz. Die Aufnahme 76 weist beispielsweise eine Höhe 78 von zumindest 1 mm auf. Die Aufnahme 76 weist beispielsweise einen Durchmesser 77 von zumindest 20 mm oder zumindest 30 mm oder zumindest 35 mm und vorzugsweise höchstens 40 mm auf. Der Durchmesser 77 korrespondiert beispielsweise zum Durchmesser 53 des Außenteils 50 und kann insoweit beispielsweise 36 mm ± 2 mm betragen, insbesondere um eine Übermaßpassung auszubilden, um einen Kraftschluss zu erhalten.

Eine Höhe 79 des Adapterteils 70, insbesondere als eine gesamte Höhe 79 des Adapterteils 70, beträgt beispielsweise zumindest 5 mm oder zumindest 10 mm und vorzugsweise höchstens 30 mm oder höchstens 20 mm. Exemplarisch beträgt die Höhe 15 mm ± 4 mm.

Seitens der ersten Seite 6 ist das Adapterteil 70 insbesondere vertieft ausgebildet, insbesondere um eine Tiefe 80 von vorliegend zumindest 1 mm oder zumindest 3 mm und vorzugsweise höchstens 10 mm oder höchstens 5 mm vertieft. Bevorzugt beträgt die Tiefe 80 etwa 4 mm ± 1 mm. Insoweit kann ein Kragen am Adapterteil 70 gebildet sein.

Das Adapterteil 70 weist insbesondere einen Durchmesser 82 bzw. Außendurchmesser von zumindest 25 mm oder zumindest 30 mm oder zumindest 35 mm und vorzugsweise höchstens 50 mm oder höchstens 40 mm auf.

Das Adapterteil 70 kann an der ersten Seite 6 ferner einen Durchmesser 81 bzw. Innendurchmesser von zumindest 20 mm oder zumindest 25 mm oder zumindest 30 mm und vorzugsweise höchstens 45 mm oder höchstens 35 mm aufweisen. Zwischen den mit 81 und 82 referenzierten Durchmessern bzw. an der zweiten Seite 6 kann vorteilhaft ein/der Kragen gebildet sein, beispielsweise mit einer Wandstärke von zumindest 1 mm und/oder höchstens 3 mm.

Insbesondere beträgt der Durchmesser 82 bzw. Außendurchmesser ca. 38 mm ± 0,5 mm.

Das Adapterteil 70 weist den insbesondere im Wesentlichen mittig angeordneten Auslassdurchgang 83 auf. Der Auslassdurchgang 83 ist beispielsweise rund ausgebildet. Der Auslassdurchgang 83 weist vorzugsweise einen Durchmesser 84 von zumindest 5 mm oder zumindest 10 mm und vorzugsweise höchstens 20 mm oder höchstens 15 mm auf. Insbesondere beträgt der Durchmesser 84 vorliegend 14 mm ± 0,5 mm.

Mit Blick auf **Fig. 8** ist ersichtlich, dass der Auslassdurchgang 83 im Wesentlichen ringförmig von vorliegend fünf Einlassdurchgängen 86 umgeben ist. Die Einlassdurchgänge 86 sind zwischeneinander und/oder in Umfangsrichtung durch Stege 85 getrennt. Auslassdurchgang 83 und Einlassdurchgänge 86 bilden vorliegend abschnittsweise den Auslassabschnitt 26 bzw. Einlassabschnitt 24 aus. Die vorliegend fünf Einlassdurchgänge 86 sind jeweils ringabschnittsförmig geformt und erstrecken sich über einen Winkel 87 von vorliegend 70° ± 2°. Eine Breite 88 der Stege 85 beträgt zumindest 0,5 mm und vorzugsweise höchstens 4 mm, z.B. 2 mm ± 1 mm.

Das Adapterteil 70 ist außenseitig mit einer umlaufenden Dichtungsaufnahme 89 bzw. Nut versehen. Diese Dichtungsaufnahme 89 kann mittels Dichtung im nicht detailliert gezeigten Wassertank 2 abdichten.

Das Adapterteil 70 ist innenseitig mit einer umlaufenden Dichtungsaufnahme 89 vorgesehen, die vorliegend im Auslassdurchgang 83 angeordnet ist. Diese Dichtungsaufnahme 89 kann mittels Dichtung im nicht detailliert gezeigten Wassertank 2 abdichten.

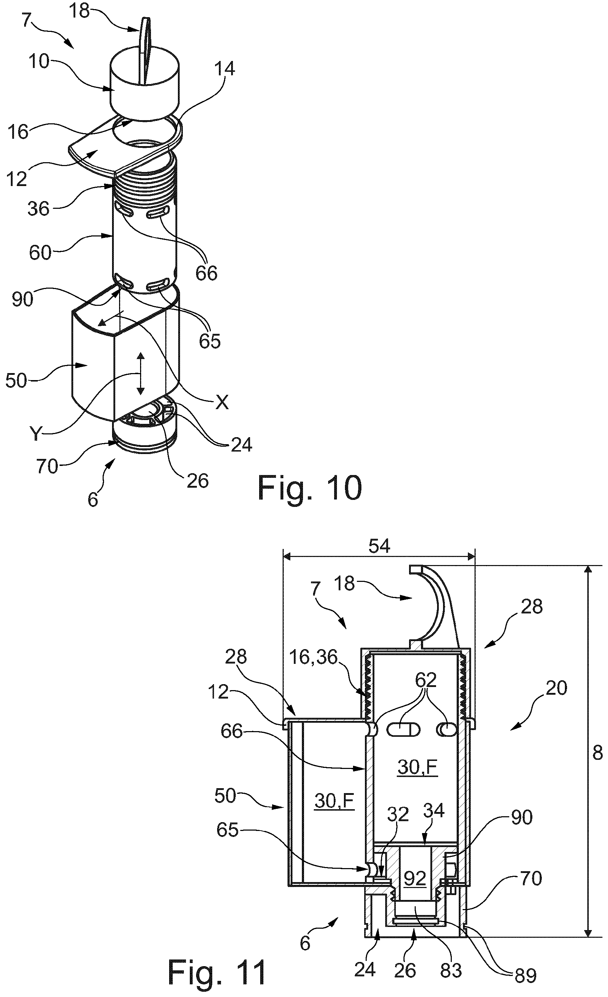

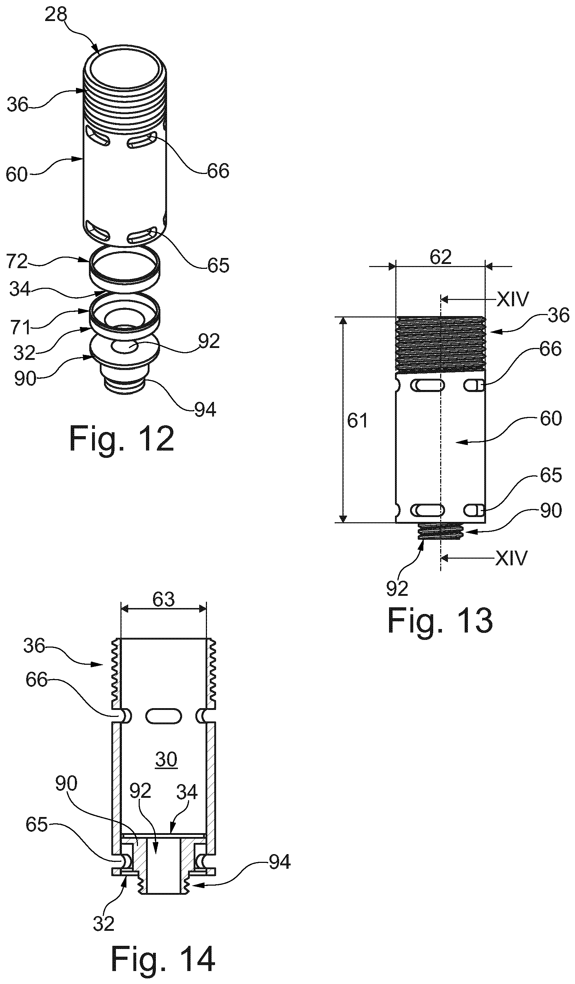

Die Filtervorrichtung 5 aus **Fig. 1** ist beispielsweise in Form eines zweiten Ausführungsbeispiels in **Fig. 10** bis **Fig. 19** näher gezeigt und wird nachfolgend näher beschrieben. Insbesondere in **Fig. 12** bis **Fig. 19** sind verschiedene Teile der Filtervorrichtung 5 ausgeblendet bzw. nicht dargestellt.

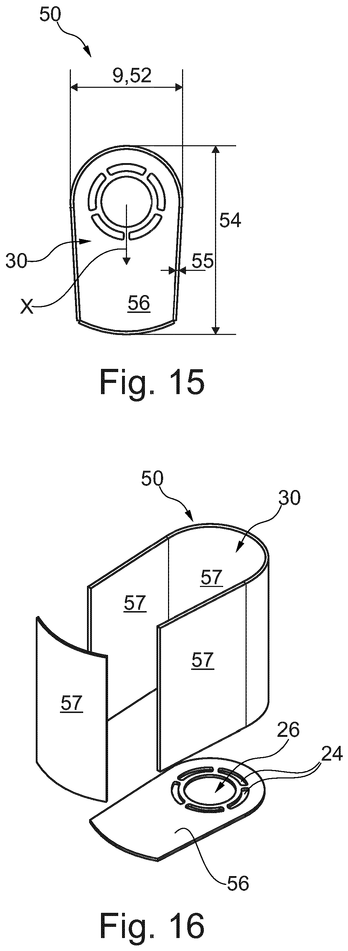

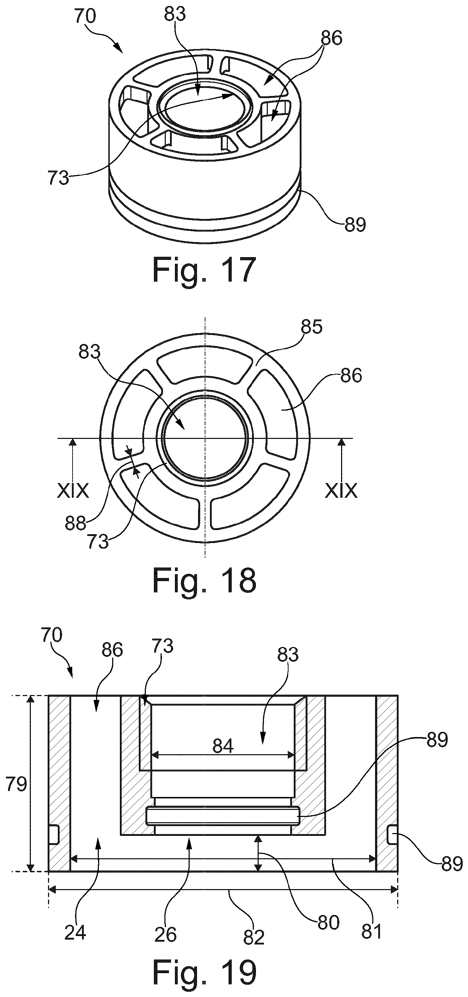

**Fig. 10** zeigt eine Explosionsansicht der Filtervorrichtung 5 und **Fig. 11** eine Schnittansicht der Filtervorrichtung 5. **Fig. 12** zeigt eine weitere Explosionsansicht, **Fig. 13** zeigt eine Seitenansicht, **Fig. 14** zeigt eine Schnittansicht in Bezug auf **Fig. 13****,** **Fig. 15** zeigt eine Draufsicht, **Fig. 16** zeigt eine Explosionsansicht in Bezug auf **Fig. 15****,** **Fig. 17** zeigt eine perspektivische Ansicht eines Adapterteils, **Fig. 18** zeigt eine Draufsicht auf das Adapterteil, und **Fig. 19** zeigt eine Schnittansicht in Bezug auf **Fig. 18****.**

Die Filtervorrichtung 5 ist zur Aufnahme von einem Filtrationsmittel F und zur Verwendung in einem Wassertank 2 einer Getränkezubereitungsanlage 1, insbesondere Kaffeevollautomat, ausgebildet.

Eine Bauhöhe 8 der Filtervorrichtung 5 beträgt vorzugsweise zumindest 50 mm oder zumindest 75 mm oder zumindest 100 mm und vorzugsweise höchstens 400 mm oder höchstens 250 mm oder höchstens 200 mm oder höchstens 175 mm oder höchstens 150 mm. Vorliegend beträgt die Bauhöhe 8 exemplarisch 140 mm ± 25 mm oder 105 mm ± 25 mm.

Die Filtervorrichtung 5 weist ein Gehäuse 20 mit einem Einlassabschnitt 24, einem Auslassabschnitt 26, einem Zugangsabschnitt 28 und einer mit dem Einlassabschnitt 24, dem Auslassabschnitt 26 und dem Zugangsabschnitt 28 fluidisch verbundenen Kammer 30 zur Aufnahme des Filtrationsmittels F auf.

Die Filtervorrichtung 5 ist zum Öffnen und zum Verschließen des Zugangsabschnitts eingerichtet. Die Filtervorrichtung 5 weist einen Deckel 10 auf, der zum Zugangsabschnitt 28 korrespondiert bzw. der für den Zugangsabschnitt 28 vorgesehen ist. Der Deckel 10 kann vorliegend verschraubt werden. Vorliegend ist der Deckel 10 als Schraubverschluss ausgebildet.

Der Einlassabschnitt 24 und der Auslassabschnitt 26 sind auf einer ersten Seite 6 der Filtervorrichtung 5 vorgesehen, wobei der Zugangsabschnitt 28 auf einer der ersten Seite 6 gegenüberliegenden zweiten Seite 7 der Filtervorrichtung 5 vorgesehen ist.

Der Einlassabschnitt 24 ist zumindest im Wesentlichen ringförmig ausgebildet und umgibt den Auslassabschnitt 26.

Wie beispielsweise **Fig. 11** und **Fig. 12** zeigen, weist die Filtervorrichtung 5 einen ersten metallischen Filtereinsatz 32, der dem Einlassabschnitt 24 zugeordnet ist und zwischen dem Einlassabschnitt 24 und der Kammer 30 angeordnet ist, und einen zweiten metallischen Filtereinsatz 34, der dem Auslassabschnitt 26 zugeordnet ist und zwischen der Kammer 30 und dem Auslassabschnitt 26 angeordnet ist, auf. Der erste metallische Filtereinsatz 32 ist durch ein vorliegend ringförmiges Halteelement 71 seitens des Einlassabschnitts 24 festgelegt. Der zweite metallische Filtereinsatz ist durch ein vorliegend ringförmiges Halteelement 72 seitens des Auslassabschnitts 26 festgelegt.

Das Gehäuse 20 weist ein Außenteil 50 und ein abschnittsweise darin angeordnetes Innenteil 60 auf, wobei und die Kammer 30 abschnittsweise zwischen dem Innenteil 60 und dem Außenteil 50 bereitgestellt ist, wobei die Kammer 30 abschnittsweise im Innenteil 60 bereitgestellt ist, und wobei das Innenteil 60 zumindest im Wesentlichen zylindrisch ausgebildet ist und abschnittsweise den Auslassabschnitt 26 bereitstellt.

Das Innenteil 60 ist zumindest im Wesentlichen zylindrisch ausgebildet, vgl. **Fig. 14****.** Das Innenteil 60 ist vorliegend zumindest abschnittsweise als Drehteil und/oder als Frästeil ausgebildet. In das Innenteil 60 ist ein Zwischenstück 90 eingesetzt, insbesondere kraftschlüssig daran festgelegt. Es ist möglich, das Zwischenstück 90 händisch aus dem Innenteil 60 herauszunehmen. Die Filtereinsätze 32, 34 sind über die Halteelemente 71, 72 gegenüber Innenteil 60 und Zwischenstück 90 festgelegt.

Das Innenteil 60 weist eine Höhe 61 von insbesondere zumindest 20 mm oder zumindest 40 mm oder zumindest 60 mm oder zumindest 80 mm und vorzugsweise höchstens 200 mm oder höchstens 150 mm oder höchstens 100 mm auf. Insbesondere beträgt die Höhe 61 etwa 90 mm ± 15 mm. Insbesondere ist das Innenteil 60 länger und/oder schmaler als das Außenteil 50.

Das Innenteil 60 weist einen Durchmesser 62 bzw. Außendurchmesser von insbesondere zumindest 20 mm oder zumindest 25 mm oder zumindest 30 mm und vorzugsweise höchstens 50 mm oder höchstens 40 mm auf. Insbesondere beträgt der Durchmesser 62 etwa 37 mm ± 3 mm.

Das Innenteil 60 weist einen Durchmesser 63 bzw. Innendurchmesser von insbesondere zumindest 20 mm oder zumindest 25 mm oder zumindest 30 mm und vorzugsweise höchstens 50 mm oder höchstens 40 mm auf. Insbesondere beträgt der Durchmesser 63 etwa 33 mm ± 3 mm.

Mit Blick auf **Fig. 15** und **Fig. 16** ist das Außenteil 50 aus mehreren Wandabschnitten 57 und einem Bodenabschnitt 56 gebildet bzw. zusammengesetzt. Die Wandabschnitte 57 und/oder der Bodenabschnitt 56 können aus Blechmaterial ausgeschnitten sein. Die Wandabschnitte 57 und der Bodenabschnitt 56 sind vorliegend verschweißt. Es ist möglich, dass das Außenteil 50 ein Umformteil ist.

Eine Baubreite 9 der Filtervorrichtung 5 entspricht einem Durchmesser 52 bzw. Teilkreisdurchmesser eines der Wandabschnitte 57. Die Baubreite 9 beträgt beispielsweise zumindest 20 mm oder zumindest 30 mm und vorzugsweise höchstens 60 mm oder höchstens 50 mm, insbesondere 40 mm ± 5 mm. Quer zur Baubreite 9 bzw. in Seitenrichtung X weist die Filtervorrichtung 5 eine Breite 54 von beispielsweise zumindest 40 mm oder zumindest 50 mm und vorzugsweise höchstens 100 mm oder höchstens 80 mm oder höchstens 60 mm auf. Eine Wandstärke 55 der Wandabschnitte 57 beträgt beispielsweise zumindest 0,25 mm oder zumindest 0,5 mm und vorzugsweise höchstens 4 mm oder höchstens 2 mm, insbesondere 1 mm ± 0,5 mm.

Der Bodenabschnitt 56 bildet vorliegend abschnittsweise den Einlassabschnitt 24 und den Auslassabschnitt 26, beispielsweise durch eingebrachte Durchgänge.

Mit Blick auf **Fig. 11** und **Fig. 14** steht ein Eingriffsmittel 94 des Zwischenstücks 90 in Form eines Gewindes aus dem Innenteil 60 heraus. Am Zwischenstück 90 kann ein Adapterteil 70 festgeschraubt werden. Ein innerer Kanal 92 des Zwischenstücks 90 ist seitens des Auslassabschnitts 26 vorgesehen, wobei der innere Kanal 92 einerseits in der Kammer 30 und andererseits im Adapterteil 70 bzw. in dessen Auslassdurchgang 83 mündet.

Das Zwischenstück 90 ermöglicht eine lösbare Befestigung des Adapterteils 70. So kann die Filtervorrichtung 5 noch besser demontiert werden, um gereinigt werden zu können. Insbesondere wird die Möglichkeit geschaffen, verschieden dimensionierte Adapterteile 70 zu befestigen, beispielsweise um Kompatibilität mit unterschiedlichen Getränkezubereitungsanlagen 1 zu verbessern und weiter Ressourcen zu sparen.

Mit Blick auf **Fig. 10** und **Fig. 11** stellt das Adapterteil 70 abschnittsweise den Auslassabschnitt 26 und den Einlassabschnitt 24 bereit, wobei das Adapterteil 70 zumindest im Wesentlichen ringförmig ist. Beispielsweise ist das Adapterteil 70 zumindest abschnittsweise ein Drehteil.

Mit Blick auf **Fig. 17, Fig. 18** und **Fig. 19** ist das Adapterteil 70 näher gezeigt.

Eine Höhe 79 des Adapterteils 70, insbesondere als eine gesamte Höhe 79 des Adapterteils 70, beträgt beispielsweise zumindest 5 mm oder zumindest 10 mm und höchstens 40 mm oder höchstens 30 mm. Exemplarisch beträgt die Höhe 20 mm ± 5 mm.

Seitens der ersten Seite 6 ist das Adapterteil 70 insbesondere vertieft ausgebildet, insbesondere um eine Tiefe 80 von vorliegend zumindest 1 mm oder zumindest 3 mm und höchstens 10 mm oder höchstens 5 mm vertieft. Bevorzugt beträgt die Tiefe 80 etwa 4 mm ± 1 mm. Insoweit kann ein Kragen am Adapterteil 70 gebildet sein.

Das Adapterteil 70 weist insbesondere einen Durchmesser 82 bzw. Außendurchmesser von zumindest 25 mm oder zumindest 30 mm oder zumindest 35 mm und vorzugsweise höchstens 50 mm oder höchstens 40 mm auf. Insbesondere beträgt der Durchmesser 82 bzw. Außendurchmesser ca. 37,5 mm ± 0,5 mm.

Das Adapterteil 70 kann an der ersten Seite 6 ferner einen Durchmesser 81 bzw. Innendurchmesser von zumindest 20 mm oder zumindest 25 mm oder zumindest 30 mm und vorzugsweise höchstens 45 mm oder höchstens 35 mm aufweisen. Zwischen den mit 81 und 82 referenzierten Durchmessern bzw. an der zweiten Seite 6 kann vorteilhaft ein/der Kragen gebildet sein, beispielsweise mit einer Wandstärke von zumindest 1 mm und/oder höchstens 3 mm.

Das Adapterteil 70 weist den insbesondere im Wesentlichen mittig angeordneten Auslassdurchgang 83 auf. Der Auslassdurchgang 83 ist beispielsweise rund ausgebildet. Der Auslassdurchgang 83 weist vorzugsweise einen Durchmesser 84 von zumindest 5 mm oder zumindest 10 mm und vorzugsweise höchstens 20 mm oder höchstens 15 mm auf. Insbesondere beträgt der Durchmesser 84 vorliegend 14 mm ± 2 mm.

Das Adapterteil 70 ist insbesondere mit einem Eingriffsmittel 73 versehen. Vorliegend ist das Eingriffsmittel 73 als Innengewinde ausgebildet, das zum Eingriffsmittel 94 des Zwischenstücks 90 korrespondiert. Das Adapterteil 70 kann am Zwischenstück 90 festgeschraubt werden, um das Außenteil 50 ferner dazwischen zu fixieren.

Das als Innengewinde ausgebildete Eingriffsmittel 73 ist z.B. in **Fig. 17** aus Gründen der einfacheren Darstellung nicht detailliert dargestellt.

Ersichtlich ist der Auslassdurchgang 83 im Wesentlichen ringförmig von vorliegend fünf Einlassdurchgängen 86 umgeben. Die Einlassdurchgänge 86 sind zwischeneinander und/oder in Umfangsrichtung durch Stege 85 getrennt. Auslassdurchgang 83 und Einlassdurchgänge 86 bilden vorliegend abschnittsweise den Auslassabschnitt 26 bzw. Einlassabschnitt 24 aus. Die vorliegend fünf Einlassdurchgänge 86 sind jeweils ringabschnittsförmig geformt. Eine Breite 88 der Stege 85 beträgt z.B. 2 mm ± 1 mm.

Das Adapterteil 70 ist außenseitig mit einer umlaufenden Dichtungsaufnahme 89 bzw. Nut versehen. Diese Dichtungsaufnahme 89 kann mittels Dichtung im nicht detailliert gezeigten Wassertank 2 abdichten.

Das Adapterteil 70 ist innenseitig mit einer umlaufenden Dichtungsaufnahme 89 vorgesehen, die vorliegend im Auslassdurchgang 83 angeordnet ist. Diese Dichtungsaufnahme 89 kann mittels Dichtung im nicht detailliert gezeigten Wassertank 2 abdichten.

Der Zugangsabschnitt 28 ist abschnittsweise zwischen dem Außenteil 50 und dem Innenteil 60 und abschnittsweise durch das Innenteil 60 gebildet, vgl. **Fig. 10** und **Fig. 11****.**

Das Außenteil 50 ist zwischen der ersten Seite 6 und der zweiten Seite 7 seitlich zum Innenteil 60 und quer zu einer Hochrichtung Y erweitert, um einen in einer Seitenrichtung X auskragenden Abschnitt der Kammer 30 auszubilden, vgl. **Fig. 10** und **Fig. 11****.**

Das Innenteil 60 weist mehrere Radialdurchgänge 65, 66 auf, von denen mehrere erste Radialdurchgänge 65 seitens der ersten Seite 6 bzw. des Einlassabschnitts 24 und von denen mehrere zweite Radialdurchgänge 66 seitens der zweiten Seite 7 bzw. des Deckels 10 angeordnet sind. Die Radialdurchgänge 65, 66 bilden einen Einlauf in den auskragenden Abschnitt der Kammer 30 und einen Auslauf aus dem auskragenden Abschnitt der Kammer 30. Die Radialdurchgänge 65, 66 sind umlaufend an dem Innenteil 60 verteilt angeordnet.

Der auskragende Abschnitt der Kammer 30 kann als eine Unterkammer der Kammer 30 verstanden werden, wobei im Innenteil 60 eine weitere Unterkammer der Kammer 30 angeordnet ist. Die Unterkammern sind über die Radialdurchgänge 65, 66 miteinander verbunden.

Die Filtervorrichtung 5 weist eine Deckelplatte 12 auf. Die Deckelplatte 12 ist beispielsweise als Frästeil, Urformteil und/oder Umformteil ausgebildet. Die Deckelplatte 12 weist vorliegend einen Durchgang 14 für das Innenteil 60 und zur Auflage auf dem Außenteil 50 auf, um den Zugangsabschnitt 28 im Abschnitt zwischen dem Außenteil 50 und dem Innenteil 60 zu bedecken. An der zweiten Seite 7 bzw. in von der ersten Seite 6 abgewandter Richtung überragt das Innenteil 60 das Außenteil 50 und stellt einen Verbindungsabschnitt 36 zur formschlüssigen Verbindung mit dem Deckel 10 bereit.

Bei diesem Ausführungsbeispiel ist nicht vorgesehen, dass der Deckel 10 sich durch den Durchgang 14 der Deckelplatte 12 erstreckt.

Es ist möglich, insbesondere wenn die Filtervorrichtung 5 in einen Wassertank 2 eingesetzt ist bzw. unter Wasser getaucht ist, mittels des Deckels 10 eine Entlüftung der Filtervorrichtung 5 zu erhalten. Beispielsweise kann in der Filtervorrichtung 5 enthaltene Luft sich im Bereich des Zugangsabschnitts 28 bzw. Deckels 10 sammeln und über ein Lösen oder Abnehmen des Deckels 10 aus der Filtervorrichtung 5 herausgelassen werden.

Der Deckel 10 stellt einen mit dem Verbindungsabschnitt 36 formschlüssig verbindbaren weiteren Verbindungsabschnitt 16 bereit, wobei der Verbindungsabschnitt 36 an dem Innenteil 60 bereitgestellt ist. Bei den Verbindungsabschnitten 16, 36 handelt es sich vorliegend um zueinander korrespondierende Gewinde. Der Deckel 10 kann die Deckelplatte 12 ans Gehäuse 20 andrücken. Zwischen dem Deckel 10 und der Deckelplatte 12 und/oder zwischen der Deckelplatte 12 und dem Gehäuse 20, insbesondere dem Außenteil 50, kann zumindest eine Dichtung vorgesehen sein.

Ein Durchmesser des Durchgangs 14 entspricht zumindest im Wesentlichen dem Durchmesser 62 des Innenteils 60 oder ist beispielsweise zumindest 1 % und/oder höchstens 10 % größer.

Der Deckel 10 weist einen Griffabschnitt 18 zum händischen Eingreifen auf, beispielsweise um die Filtervorrichtung 5 aus einem Wassertank 2 herauszuziehen. Vorliegend ist der Griffabschnitt 18 als Öse ausgebildet. Die Öse ist beispielsweise an einen anderen Abschnitt des Deckels 10 angeschweißt.

Der Deckel 10 und das Gehäuse 20, insbesondere das Außenteil 50 und das Innenteil 60, weisen jeweils einen Metallwerkstoff auf. Das Adapterteil 70 und das Zwischenstück 90 weisen jeweils einen Metallwerkstoff auf. Bei dem Metallwerkstoff bzw. den Metallwerkstoffen handelt es sich insbesondere um Stahlwerkstoff.

Der Deckel 10 ist vorliegend zumindest im Wesentlichen rund und/oder zylindrisch ausgebildet. Mittels des Deckels 10 kann der Zugangsabschnitt 28 lösbar verschlossen werden. Wenn der Deckel 10 abgenommen bzw. abgeschraubt ist, kann auch die Deckelplatte 12 abgenommen werden. Damit wird die Kammer 30 an der zweiten Seite 7 zugänglich gemacht. Es kann Filtrationsmittel F durch den Zugangsabschnitt 28 in die Kammer 30 eingebracht bzw. herausgeholt werden. Beispielsweise kann schüttfähiges Filtrationsmittel F eingeschüttet bzw. ausgeschüttet werden. Anschließend kann die Deckelplatte 12 aufgesetzt werden und mittels des anschließend aufzuschraubenden Deckels 10 kann der Zugangsabschnitt 28 wieder dicht verschlossen werden.

Die vorbeschriebenen Filtervorrichtungen 5 sind insbesondere demontierbar ausgebildet. Das bedeutet, dass sie zumindest teilweise auseinander gebaut werden können, beispielsweise um die Einzelteile besser zu reinigen. Beispielsweise können zumindest Gehäuse 50, Deckel 10 und Adapterteil 70 voneinander getrennt werden. Möglich ist es auch, dass das Zwischenstück 90 vom Gehäuse 20 händisch trennbar ausgebildet ist. Möglich ist es, dass die Filtereinsätze 32, 34 und ggf. Dichtungen ersetzbar ausgebildet sind.

Die vorbeschriebenen Filtervorrichtungen 5 können mit einem Verfahren zum Wiederaufbereiten wiederaufbereitet werden. Dabei kann ein Zugangsabschnitt 28 einer jeweiligen Filtervorrichtung 5 geöffnet werden, ein verbrauchtes Filtrationsmittel über den Zugangsabschnitt 28 aus der jeweiligen Filtervorrichtung 5 entnommen werden, ein neues Filtrationsmittel über den Zugangsabschnitt 28 in die jeweilige Filtervorrichtung 5 eingebracht werden und der Zugangsabschnitt 28 der jeweiligen Filtervorrichtung 5 verschlossen werden.

Um eine der vorbeschriebenen Filtervorrichtungen 5 herzustellen, kann ein Verfahren vorgesehen sein. Bei dem Verfahren erfolgt ein Bereitstellen eines Gehäuses 20 mit einem Einlassabschnitt 24, einem Auslassabschnitt 26, einem Zugangsabschnitt 28 und einer mit dem Einlassabschnitt 24, dem Auslassabschnitt 26 und dem Zugangsabschnitt 28 fluidisch verbundenen Kammer 30 zur Aufnahme von Filtrationsmittel F. Ferner erfolgt ein Bereitstellen eines Deckels 10, der zum lösbaren Verschließen des Zugangsabschnitts 28 eingerichtet ist.

Bei dem Verfahren kann das Gehäuse 20 insbesondere zumindest teilweise metallbearbeitend und/oder durch einen Umformprozess und/oder Urformprozess und/oder thermischen Fügeprozess bereitgestellt werden. Es ist auch möglich, dass Teile der herzustellenden Filtervorrichtung 5 mittels Kunststoffspritzguss und/oder mit einem additiven Fertigungsverfahren bzw. 3D-Druck hergestellt werden.

Bei dem Verfahren kann das Gehäuse 20 mit dem Adapterteil 70 verpresst werden.

Alternativ oder ergänzend kann bei dem Verfahren Kunststoffspritzguss zum zumindest teilweisen Herstellen des Gehäuses 20 eingesetzt werden.

### Bezugszeichenliste

- 1: Getränkezubereitungsanlage
- 2: Wassertank
- 5: Filtervorrichtung
- 6: Erste Seite
- 7: Zweite Seite
- 8: Bauhöhe
- 9: Baubreite

- 10: Deckel
- 12: Deckelplatte
- 14: Durchgang
- 16: Verbindungsabschnitt
- 18: Griffabschnitt

- 20: Gehäuse
- 24: Einlassabschnitt
- 26: Auslassabschnitt
- 28: Zugangsabschnitt
- 30: Kammer
- 32: Erster metallischer Filtereinsatz
- 34: Zweiter metallischer Filtereinsatz
- 36: Verbindungsabschnitt

- 50: Außenteil
- 51: Höhe
- 52: Durchmesser
- 53: Durchmesser
- 54: Breite
- 55: Wandstärke
- 56: Bodenabschnitt
- 57: Wandabschnitt

- 60: Innenteil
- 61: Höhe
- 62: Durchmesser
- 63: Durchmesser
- 65: Radialdurchgang
- 66: Radialdurchgang

- 70: Adapterteil
- 71: Halteelement
- 72: Halteelement
- 73: Eingriffsmittel
- 74: Aufnahme
- 75: Durchmesser
- 76: Aufnahme
- 77: Durchmesser
- 78: Höhe
- 79: Höhe
- 80: Tiefe
- 81: Durchmesser
- 82: Durchmesser
- 83: Auslassdurchgang
- 84: Durchmesser
- 85: Steg
- 86: Einlassdurchgang
- 87: Winkel
- 88: Breite
- 89: Dichtungsaufnahme

- 90: Zwischenstück
- 92: Innerer Kanal
- 94: Eingriffsmittel
- F: Filtrationsmittel
- X: Seitenrichtung
- Y: Hochrichtung

## Patentansprüche

1. Filtervorrichtung (5) zur Aufnahme eines Filtrationsmittels (F) und zur Verwendung in einem Wassertank (2) einer Getränkezubereitungsanlage (1), insbesondere Kaffeevollautomat, wobei die Filtervorrichtung (5) ein Gehäuse (20) mit einem Einlassabschnitt (24), einem Auslassabschnitt (26), einem Zugangsabschnitt (28) und einer mit dem Einlassabschnitt (24), dem Auslassabschnitt (26) und dem Zugangsabschnitt (28) fluidisch verbundenen Kammer (30) zur Aufnahme des Filtrationsmittels (F) aufweist, wobei die Filtervorrichtung (5) zum Verschließen des Zugangsabschnitts (28) eingerichtet ist und einen Deckel (10) für den Zugangsabschnitt (28) aufweist, wobei
die Filtervorrichtung (5) zum Öffnen des Zugangsabschnitts (28) eingerichtet ist und der Deckel (10) formschlüssig und/oder kraftschlüssig mit dem Gehäuse (20) verbunden werden kann, **dadurch gekennzeichnet, dass**
der Deckel (10) eine Dichtung aufweist, die ringförmig und/oder als O-Ring-Dichtung ausgebildet ist,
die Dichtung elastisch ist,
die Dichtung zwischen Metallwerkstoffen und/oder Polymerzusammensetzungen abdichten kann, und
die Dichtung trinkwassergeeignet ist.

2. Filtervorrichtung (5) nach dem voranstehenden Anspruch,
wobei der Einlassabschnitt (24) und der Auslassabschnitt (26) auf einer ersten Seite (6) der Filtervorrichtung (5) vorgesehen sind und der Zugangsabschnitt (28) auf einer der ersten Seite (6) gegenüberliegenden zweiten Seite (7) der Filtervorrichtung (5) vorgesehen ist, und vorzugsweise
wobei der Einlassabschnitt (24) zumindest im Wesentlichen ringförmig ausgebildet ist und den Auslassabschnitt (26) umgibt.

3. Filtervorrichtung (5) nach einem der voranstehenden Ansprüche, aufweisend
einen ersten metallischen Filtereinsatz (32), der dem Einlassabschnitt (24) zugeordnet ist und zwischen dem Einlassabschnitt (24) und der Kammer (30) angeordnet ist, und
einen zweiten metallischen Filtereinsatz (34), der dem Auslassabschnitt (26) zugeordnet ist und zwischen der Kammer (30) und dem Auslassabschnitt (26) angeordnet ist.

4. Filtervorrichtung (5) nach einem der voranstehenden Ansprüche,
wobei das Gehäuse (20) ein Außenteil (50) und ein zumindest abschnittsweise darin angeordnetes Innenteil (60) aufweist und die Kammer (30) zumindest abschnittsweise zwischen Innenteil (60) und Außenteil (50) bereitgestellt ist, und
wobei das Innenteil (60) zumindest im Wesentlichen zylindrisch ausgebildet ist und/oder zumindest abschnittsweise den Auslassabschnitt (26) bereitstellt.

5. Filtervorrichtung (5) nach einem der voranstehenden Ansprüche, aufweisend ein am Gehäuse (20) festgelegtes Adapterteil (70), das zumindest abschnittsweise den Auslassabschnitt (26) und den Einlassabschnitt (24) bereitstellt, wobei das Adapterteil (70) zumindest im Wesentlichen ringförmig ist.

6. Filtervorrichtung (5) nach einem der voranstehenden zwei Ansprüche, wobei der Zugangsabschnitt (28) zumindest abschnittsweise zwischen dem Außenteil (50) und dem Innenteil (60) und, vorzugsweise, zumindest abschnittsweise durch das Innenteil (60) gebildet ist.

7. Filtervorrichtung (5) nach einem der voranstehenden drei Ansprüche, aufweisend ein am Innenteil (60) und am Adapterteil (70) festgelegtes Zwischenstück (90) mit einem inneren Kanal (92) seitens des Auslassabschnitts (26), vorzugsweise wobei das Innenteil (60) und das Adapterteil (70) form- und/oder kraftschlüssig miteinander verbunden sind.

8. Filtervorrichtung (5) nach einem der voranstehenden vier Ansprüche, wobei das Außenteil (50) zwischen der ersten (6) und der zweiten (7) Seite seitlich zum Innenteil (60) erweitert ist, um einen in einer Seitenrichtung (X) auskragenden Abschnitt der Kammer (30) auszubilden.

9. Filtervorrichtung (5) nach einem der voranstehenden fünf Ansprüche, wobei das Innenteil (60) mehrere Radialdurchgänge (65, 66) aufweist, von denen zumindest ein erster Radialdurchgang (65) seitens der ersten Seite (6) und/oder des Einlassabschnitts (24) und von denen zumindest ein zweiter Radialdurchgang (66) seitens der zweiten Seite (7), des Zugangsabschnitts (28) und/oder des Deckels (10) angeordnet ist.

10. Filtervorrichtung (5) nach einem der voranstehenden sechs Ansprüche, aufweisend eine Deckelplatte (12) mit einem Durchgang (14) für das Innenteil (60) und zur Auflage auf dem Außenteil (50), um den Zugangsabschnitt (28) im Abschnitt zwischen dem Außenteil (50) und dem Innenteil (60) zu bedecken, wobei an der zweiten Seite (7) und in einer von der ersten Seite (6) abgewandten Richtung das Innenteil (60) das Außenteil (50) überragt und, vorzugsweise, einen Verbindungsabschnitt (36) zur formschlüssigen Verbindung mit dem Deckel (10) bereitstellt.

11. Filtervorrichtung (5) nach einem der voranstehenden Ansprüche,
wobei das Gehäuse (20) einen/den Verbindungsabschnitt (36) bereitstellt,
wobei der Deckel (10) einen mit dem Verbindungsabschnitt (36) formschlüssig verbindbaren weiteren Verbindungsabschnitt (16) bereitstellt, und vorzugsweise
wobei der Verbindungsabschnitt (36) an dem Innenteil (60) oder an dem Außenteil (50) bereitgestellt ist, und vorzugsweise
wobei der Deckel (10) einen Griffabschnitt (18) zum händischen Eingreifen aufweist.

12. Filtervorrichtung (5) nach einem der voranstehenden Ansprüche, wobei
der Deckel (10) und das Gehäuse (20) Metallwerkstoff aufweisen oder daraus bestehen, und bevorzugt
das Außenteil (50), das Innenteil (60) und das Adapterteil (70) Metallwerkstoff aufweisen oder daraus bestehen.

13. Verwendung einer Filtervorrichtung (5) nach einem der voranstehenden Ansprüche in einer Getränkezubereitungsanlage (1), wobei
ein Filtrationsmittel (F) in der Filtervorrichtung (5) anzuordnen oder angeordnet ist, und
die Getränkezubereitungsanlage (1) zum Ansaugen des Wassers aus dem Auslassabschnitt (26) eingerichtet ist.

14. Verfahren zum Wiederaufbereiten einer Filtervorrichtung (5) nach einem der Ansprüche 1 bis 12, wobei
der Zugangsabschnitt (28) geöffnet wird,
ein verbrauchtes Filtrationsmittel über den Zugangsabschnitt (28) aus der Filtervorrichtung (5) entnommen wird,
ein neues Filtrationsmittel über den Zugangsabschnitt (28) in die Filtervorrichtung (5) eingebracht wird, und
der Zugangsabschnitt (28) verschlossen wird.

15. Verfahren zum Herstellen einer Filtervorrichtung (5) nach einem der Ansprüche 1 bis 12, das Verfahren aufweisend
Bereitstellen des Gehäuses (20) und des Deckels (10),
wobei das Gehäuse (20) und der Deckel (10) zumindest teilweise metallbearbeitend und durch einen Umformprozess und/oder Urformprozess und/oder thermischen Fügeprozess bereitgestellt wird.

## Claims

1. Filter device (5) for receiving a filtration means (F) and for use in a water tank (2) of a beverage preparation installation (1), in particular a fully automatic coffee machine, wherein the filter device (5) comprises a housing (20) with an inlet section (24), an outlet section (26), an access section (28) and a chamber (30), which is fluidically connected to the inlet section (24), the outlet section (26) and the access section (28), for receiving the filtration means (F), wherein the filter device (5) is configured to close the access section (28) and comprises a cover (10) for the access section (28), wherein
the filter device (5) is configured to open the access section (28) and the cover (10) can be connected in a form-fitting and/or force-locking manner to the housing (20), **characterised in that**
the cover (10) comprises a seal that is designed to be annular and/or as an O-ring seal,
the seal is elastic,
the seal can form a seal between metal materials and/or polymer compositions, and
the seal is suitable for drinking water.

2. Filter device (5) according to the preceding claim,
wherein the inlet section (24) and the outlet section (26) are provided on a first side (6) of the filter device (5) and the access section (28) is provided on a second side (7) of the filter device (5) opposite the first side (6), and preferably
wherein the inlet section (24) is designed to be at least substantially annular and surrounds the outlet section (26).

3. Filter device (5) according to any of the preceding claims, comprising
a first metallic filter insert (32) associated with the inlet section (24) and arranged between the inlet section (24) and the chamber (30), and
a second metallic filter insert (34) associated with the outlet section (26) and arranged between the chamber (30) and the outlet section (26).

4. Filter device (5) according to any of the preceding claims,
wherein the housing (20) comprises an outer part (50) and an inner part (60) arranged therein at least in sections, and wherein the chamber (30) is provided at least in sections between the inner part (60) and the outer part (50), and
wherein the inner part (60) is designed to be at least substantially cylindrical and/or at least in sections provides the outlet section (26).

5. Filter device (5) according to any of the preceding claims, comprising an adapter part (70) fixed to the housing (20), which provides the outlet section (26) and the inlet section (24) at least in sections, wherein the adapter part (70) is at least substantially annular.

6. Filter device (5) according to any of the preceding two claims, wherein the access section (28) is formed at least in sections between the outer part (50) and the inner part (60) and, preferably, at least in sections by the inner part (60).

7. Filter device (5) according to any of the preceding three claims, comprising an intermediate piece (90) fixed to the inner part (60) and to the adapter part (70), with an inner channel (92) on the side of the outlet section (26), preferably wherein the inner part (60) and the adapter part (70) are connected to one another in a form-fitting and/or force-locking manner.

8. Filter device (5) according to any of the preceding four claims, wherein the outer part (50) is extended between the first (6) and the second (7) side laterally to the inner part (60) in order to form a section of the chamber (30) protruding in a lateral direction (X).

9. Filter device (5) according to any of the preceding five claims, wherein the inner part (60) comprises a plurality of radial passages (65, 66), of which
at least one first radial passage (65) is arranged at the first side (6) and/or the inlet section (24) and of which at least one second radial passage (66) is arranged at the second side (7), the access section (28) and/or the cover (10).

10. Filter device (5) according to any of the preceding six claims, comprising a cover plate (12) with a passage (14) for the inner part (60) and for resting on the outer part (50) in order to cover the access section (28) in the section between the outer part (50) and the inner part (60), wherein on the second side (7) and in a direction facing away from the first side (6), the inner part (60) projects beyond the outer part (50) and, preferably, provides a connecting section (36) for form-fitting connection to the cover (10).

11. Filter device (5) according to any of the preceding claims,
wherein the housing (20) provides a/the connecting section (36),
wherein the cover (10) provides a further connecting section (16) that can be connected to the connecting section (36) in a form-fitting manner, and preferably
wherein the connecting section (36) is provided on the inner part (60) or on the outer part (50), and preferably
wherein the cover (10) comprises a handle section (18) for manual engagement.

12. Filter device (5) according to any of the preceding claims, wherein
the cover (10) and the housing (20) comprise or consist of metal material, and preferably
the outer part (50), the inner part (60) and the adapter part (70) comprising or consisting of metal material.

13. Use of a filter device (5) according to any of the preceding claims in a beverage preparation installation (1), wherein
a filtration means (F) is to be or is arranged in the filter device (5), and
the beverage preparation installation (1) is configured to draw the water from the outlet section (26).

14. Method of refurbishing a filter device (5) according to any of claims 1 to 12, wherein
the access section (28) is opened,
a used filtration means is removed from the filter device (5) via the access section (28),
a new filtration means is introduced into the filter device (5) via the access section (28), and
the access section (28) is closed.

15. Method for manufacturing a filter device (5) according to any of claims 1 to 12, the method comprising
providing the housing (20) and the cover (10),
wherein the housing (20) and the cover (10) are provided at least in part by metalworking and by a forming process and/or molding process and/or thermal joining process.

## Revendications

1. Dispositif de filtration (5) destiné à recevoir un agent filtrant (F) et à être utilisé dans un réservoir d'eau (2) d'une installation de préparation de boissons (1), en particulier une machine à café entièrement automatique, le dispositif de filtration (5) comportant un boîtier (20) avec une section d'entrée (24), une section de sortie (26), une section d'accès (28) et une chambre (30) reliée fluidiquement à la section d'entrée (24), à la section de sortie (26) et à la section d'accès (28) pour recevoir l'agent filtrant (F), le dispositif de filtration (5) étant conçu de manière à fermer la section d'accès (28) et comportant un couvercle (10) pour la section d'accès (28),
le dispositif de filtration (5) étant conçu de manière à ouvrir la section d'accès (28) et le couvercle (10) pouvant être relié au boîtier (20) par complémentarité de forme et/ou par adhérence, **caractérisé en ce que**
le couvercle (10) comporte un joint, réalisé sous forme annulaire et/ou sous forme de joint torique,
le joint étant élastique,
le joint pouvant assurer l'étanchéité entre des matériaux métalliques et/ou des compositions polymères, et
le joint étant adapté à l'eau potable.

2. Dispositif de filtration (5) selon la revendication précédente,
dans lequel la section d'entrée (24) et la section de sortie (26) sont prévues sur un premier côté (6) du dispositif de filtration (5) et la section d'accès (28) est prévue sur un second côté (7) du dispositif de filtration (5) opposé au premier côté (6), et de préférence
dans lequel la section d'entrée (24) est réalisée au moins sensiblement sous forme annulaire et entoure la section de sortie (26).

3. Dispositif de filtration (5) selon l'une quelconque des revendications précédentes, comportant
un premier élément filtrant métallique (32) associé à la section d'entrée (24) et disposé entre la section d'entrée (24) et la chambre (30), et
un second élément filtrant métallique (34) associé à la section de sortie (26) et disposé entre la chambre (30) et la section de sortie (26).

4. Dispositif de filtration (5) selon l'une quelconque des revendications précédentes,
dans lequel le boîtier (20) comporte une partie extérieure (50) et une partie intérieure (60) disposée au moins sur une portion à l'intérieur de celle-ci et la chambre (30) est réalisée au moins sur une portion entre la partie intérieure (60) et la partie extérieure (50), et
dans lequel la partie intérieure (60) est réalisée au moins sensiblement sous forme cylindrique et/ou forme au moins sur une portion la section de sortie (26).

5. Dispositif de filtration (5) selon l'une quelconque des revendications précédentes, comportant une pièce d'adaptation (70) fixée sur le boîtier (20), qui forme au moins sur une portion la section de sortie (26) et la section d'entrée (24), la pièce d'adaptation (70) étant au moins sensiblement de forme annulaire.

6. Dispositif de filtration (5) selon l'une quelconque des deux revendications précédentes, dans lequel la section d'accès (28) est formée au moins sur une portion entre la partie extérieure (50) et la partie intérieure (60) et, de préférence, au moins sur une portion par la partie intérieure (60).

7. Dispositif de filtration (5) selon l'une quelconque des trois revendications précédentes, comportant une pièce intermédiaire (90) fixée sur la partie intérieure (60) et sur la pièce d'adaptation (70) avec un canal intérieur (92) du côté de la section de sortie (26), la partie intérieure (60) et la pièce d'adaptation (70) étant de préférence reliées entre elles par complémentarité de forme et/ou par adhérence.

8. Dispositif de filtration (5) selon l'une quelconque des quatre revendications précédentes, dans lequel la partie extérieure (50) est élargie latéralement par rapport à la partie intérieure (60) entre le premier côté (6) et le second côté (7) pour former une section en saillie de la chambre (30) dans une direction latérale (X).

9. Dispositif de filtration (5) selon l'une quelconque des cinq revendications précédentes, dans lequel la partie intérieure (60) comporte plusieurs passages radiaux (65, 66), dont
au moins un premier passage radial (65) est disposé du côté du premier côté (6) et/ou de la section d'entrée (24) et dont au moins un second passage radial (66) est disposé du côté du second côté (7), de la section d'accès (28) et/ou du couvercle (10).

10. Dispositif de filtration (5) selon l'une quelconque des six revendications précédentes, comportant une plaque de couvercle (12) avec un passage (14) pour la partie intérieure (60) et destinée à reposer sur la partie extérieure (50) de manière à recouvrir la section d'accès (28) dans la section entre la partie extérieure (50) et la partie intérieure (60), dans lequel, sur le second côté (7) et dans une direction opposée au premier côté (6), la partie intérieure (60) dépasse de la partie extérieure (50) et forme de préférence une section de liaison (36) pour une liaison par complémentarité de forme avec le couvercle (10).

11. Dispositif de filtration (5) selon l'une quelconque des revendications précédentes,
dans lequel le boîtier (20) forme une/la section de liaison (36),
dans lequel le couvercle (10) forme une autre section de liaison (16) pouvant être reliée par complémentarité de forme avec la section de liaison (36), et de préférence
dans lequel la section de liaison (36) est formée sur la partie intérieure (60) ou sur la partie extérieure (50), et de préférence
dans lequel le couvercle (10) comporte une section de préhension (18) pour une prise manuelle.

12. Dispositif de filtration (5) selon l'une quelconque des revendications précédentes, dans lequel
le couvercle (10) et le boîtier (20) comportent ou sont constitués d'un matériau métallique, et de préférence
la partie extérieure (50), la partie intérieure (60) et la pièce d'adaptation (70) comportent ou sont constituées d'un matériau métallique.

13. Utilisation d'un dispositif de filtration (5) selon l'une quelconque des revendications précédentes dans une installation de préparation de boissons (1), dans laquelle
un agent filtrant (F) est disposé ou est destiné à être disposé dans le dispositif de filtration (5), et
l'installation de préparation de boissons (1) est configurée pour aspirer l'eau depuis la section de sortie (26).

14. Procédé de reconditionnement d'un dispositif de filtration (5) selon l'une quelconque des revendications 1 à 12, dans lequel
la section d'accès (28) est ouverte,
un agent filtrant usagé est retiré du dispositif de filtration (5) par la section d'accès (28),
un nouvel agent filtrant est introduit dans le dispositif de filtration (5) par la section d'accès (28), et
la section d'accès (28) est fermée.

15. Procédé de fabrication d'un dispositif de filtration (5) selon l'une quelconque des revendications 1 à 12, le procédé comportant
la mise à disposition du boîtier (20) et du couvercle (10),
dans lequel le boîtier (20) et le couvercle (10) sont réalisés au moins partiellement par travail du métal et par un processus de formage et/ou un processus de moulage et/ou un processus d'assemblage thermique.
